# EUROPEAN PATENT SPECIFICATION

(11) **EP 4 234 675 B1**
(45) Date of publication and mention of the grant of the patent: **28.10.2026**
(21) Application number: 22158944.3
(22) Date of filing: 25.02.2022
(51) Int. Cl.: C12C 11/11, C12C 12/04, C12H 3/00, C12H 3/02, C12H 3/04

(54) **METHOD FOR MANUFACTURING A BEER-BASED CONCENTRATE, METHOD FOR MANUFACTURING A BEER-BASED BEVERAGE, BEER-BASED CONCENTRATE, AND USE OF THE BEER-BASED CONCENTRATE**
VERFAHREN ZUR HERSTELLUNG EINES KONZENTRATS AUF BIERBASIS, VERFAHREN ZUR HERSTELLUNG EINES GETRÄNKS AUF BIERBASIS, KONZENTRAT AUF BIERBASIS, UND VERWENDUNG DES KONZENTRATS AUF BIERBASIS
PROCÉDÉ DE FABRICATION D'UN CONCENTRÉ À BASE DE BIÈRE, PROCÉDÉ DE FABRICATION D'UNE BOISSON À BASE DE BIÈRE, CONCENTRÉ À BASE DE BIÈRE, ET UTILISATION DU CONCENTRÉ À BASE DE BIÈRE

(43) Date of publication of application: 30.08.2023
(73) Proprietor: Hermann Hambach, Odense 5000 (DK)
(72) Inventor: Hambach, Hermann, 3000 Helsingør (DK)
(74) Representative: Kuhnen & Wacker Patent- und Rechtsanwaltsbüro PartG mbB

(56) References cited:
- WO-A1-2021/070930
- WO-A1-2021/228871
- WO-A1-2021/228878
- US-A1- 2021 324 309
- ANONYMOUS: "Why the final gravity of beer doesn't tell the whole truth about sweetness | Suregork Loves Beer", 12 October 2012 (2012-10-12), pages 1 - 5, XP093212018, Retrieved from the Internet <URL:https://beer.suregork.com/?p=2584>
- LEDERMAN NOAH: "Concentrated Beer? Cutting Liquid before Shipping Also Cuts Its Carbon Footprint | Scientific American", 1 July 2021 (2021-07-01), pages 1 - 9, XP093212017, Retrieved from the Internet <URL:https://www.scientificamerican.com/article/concentrated-beer-cutting-liquid-before-shipping-also-cuts-its-carbon-footprint/>
- TROILO ANTONIO ET AL: "Low Carbohydrate Beers Produced by a Selected Yeast Strain from an Alternative Source", JOURNAL OF THE AMERICAN SOCIETY OF BREWING CHEMISTS., vol. 78, no. 1, 25 November 2019 (2019-11-25), US, pages 80 - 88, XP093075370, ISSN: 0361-0470, DOI: 10.1080/03610470.2019.1682887

## Description

### Technical field

The present invention relates to the manufacturing of beverages, in particular beer-based beverages and beers including non-alcoholic and low alcoholic beers. More particularly, the present invention relates to a simplified method of manufacturing beer-based beverages and preferably beers, and of improving beer-based beverages by means of manufacturing and applying a beer-based concentrate.

### Prior art and object to be solved

The sensory impression of conventional beer-based beverages, in particular non-alcoholic and low alcoholic beers, often differs from regular (full alcoholic) beer. In particular, these beverages lack body, also called platefulness or mouthfulness, due to the raw materials used or in particular, due to the manufacturing method applied. Moreover, Brewers and beverage producers have made great effort in order to improve the sensory impression by developing quite a number of challenging technologies, such as stopped fermentation, cold-contact fermentation, fermentation with maltose-intolerant yeasts, or re-addition of aroma compounds after removing ethanol and other volatiles by distillation, rectification, stripping or membrane treatment of regular beer. However, although great progress with regard to the quality of taste and aroma of non-alcoholic and low alcoholic beers and other beer-based beverages could be achieved, there is still room for improvement, since most of the conventional non-alcoholic and low alcoholic beers or other beer-based beverages either lack platefulness or cause an artificial flavor or beer uncharacteristic sweetness or a wort-like aroma impression to the consumer or even all three. In particular, it is still difficult or even impossible to achieve a beer-based beverage of the above mentioned type having a satisfying platefulness and in addition, is free of a wort-type carbonyl- or sweet kind of taste, which are considered as unpleasant or beer untypical off-flavors. It is also known in the art that the addition of conventional malt extracts typically leads to said unpleasant wort taste typical carbonyl-off-flavors and increases in addition the microbial susceptibility significantly of the resulting beverage.

Conventional manufacturing methods for beer-based beverages and the resulting beverages are known to the skilled person from the following publications: WO 2021/228871 A1; WO 2021/070930 A1; WO 2021/228878 A1; Anonymous: "Why the final gravity of beer doesn't tell the whole truth about sweetness | Suregork Loves Beer",12 October 2012 (2012-10-12), pages 1-5, XP093212018, Retrieved from the Internet: URL:https://beer.suregork.com/?p=2584; Lederman Noah: "Concentrated Beer? Cutting Liquid before Shipping Also Cuts Its Carbon Footprint | Scientific American", 1 July 2021, pages 1-9, XP093212017, Retrieved from the Internet: URL:https://www.scientificamerican.com/article/concentrated-beer-cutting-liquid-before-shipping-also-cuts-its-carbon-footprint/; US 2021/324309 A1; Troilo Antonio ET AL: "Low Carbohydrate Beers Produced by a Selected Yeast Strain from an Alternative Source", JOURNAL OF THE AMERICAN SOCIETY OF BREWING CHEMISTS., vol. 78, no. 1, 25 November 2019, pages 80-88, XP093075370, ISSN: 0361-0470, DOI: 10.1080/03610470.2019.1682887.

It is therefore an object of the present invention to overcome at least one of the shortcomings of the prior art as described above and at the end, to provide a beer-based beverage having an improved sensory impression. It is another object of the present invention to provide a corresponding manufacturing method and a suitable raw material for said manufacturing method.

### Definitions and measuring methods referring to the invention

According to the present invention, the term "fermentation process involving brewer's yeast", "fermenting ... by means of brewer's yeast" or similar means any conventional fermentation process as it is known in the field of brewing beer or manufacturing beverages which involves a metabolization of sugars including at least on of monosaccharides, disaccharides and trisaccharides, in particular including at least one of hexose, sucrose, maltose, and maltotriose, by yeast cells of the genus *Saccharomyces* to thereby form Ethanol and CO₂.

According to the present invention, the term "beer-based beverage" means any beverage which contains a beer or a precursor thereof (that is, mash or wort) or which was produced using a beer or a precursor thereof, and includes in particular: beer, low alcoholic beer, non-alcoholic beer, and beer mixed beverages, such as Radler, shandies or alcopops.

According to the present invention, the term "regular beer" means a beer having an original gravity (OG) of 3.0 to 28.0 % by mass. The term "non-alcoholic beer" means a beer having an ethanol content of below 0.5 % by volume, preferably below 0.1 % by volume, in particular below 0.05 % by volume.

According to the present invention, the term "mixing", in particular when referring to the inventive method (step (bb)), means blending of at least two or more components, and may also, but not necessarily, include homogenization

In the present invention, the mass concentrations of glucose, fructose, sucrose, maltose, and maltotriose in a beer-based concentrate or in a beverage, in particular in a beer-based beverage, in a beer, in a low alcoholic beer or in a non-alcoholic beer, are respectively measured by the method: MEBAK WBBM 2.7.1, 2021 (MEBAK = "Mitteleuropäische Brautechnische Analysenkommission"; WBBM = "Methodensammlung für brautechnische Analysenmethoden für Würze, Bier und Biermischgetränke").

The sum of the mass concentrations of glucose, fructose, sucrose, maltose, and maltotriose (= total mass concentration) is calculated by adding the single mass concentrations of said sugars as detected by the methods as described above.

In the present invention, the real fermentation degree (RFD) of a diluted beer-based concentrate, or of a beverage, in particular of a beer-based beverage, of a beer, of a low alcoholic beer or of a non-alcoholic beer, is measured by the method MEBAK WBBM 2.9.6.3, 2012.

In the present invention, the residual extract content of a beverage, in particular of a beer-based beverage, of a beer, of a low alcoholic beer or of a non-alcoholic beer, is measured by the method MEBAK WBBM 2.9.6.3, 2012.

In the present invention, the specific weight SL 20/20°C of a beer-based concentrate, or of a beverage, in particular of a beer-based beverage, of a beer, of a low alcoholic beer or of a non-alcoholic beer, is measured by the method MEBAK WBBM 2.9.6.3, 2012.

In the present invention, the quantity of yeast cells (yeast cell count) in a beer-based concentrate, or in a beverage, in particular in a beer-based beverage, in a beer, in a low alcoholic beer or in a non-alcoholic beer, is measured by hemocytometry method (EBC 3.1.1.1).

In the present invention, the extract content of a beer-based concentrate or of a beverage, in particular of a beer-based beverage, of a beer, of a low alcoholic beer or of a non-alcoholic beer, is measured by the method MEBAK WBBM 2.9.2.3, 2012.

In the present invention, the ethanol content of a beer-based concentrate, or a beverage, in particular of a beer-based beverage, of a beer, of a low alcoholic beer or of a non-alcoholic beer, is measured by the method MEBAK WBBM 2.9.6.3, 2012.

In the present invention, drinking water quality means a water that complies with the definition of drinking water according to the German "Trinkwasserverordnung" in the version as amended on September 22, 2021, entered into force on September 25, 2021.

In the present invention, the dissolved oxygen content of a water or of a beverage, in particular of a beer-based beverage, of a beer, of a low alcoholic beer or of a non-alcoholic beer, is measured by an amperometric/polarographic method, that is, MEBAK WBBM 2.28.1.1, 2012.

In the present invention, the content of thiobarbituric acid (TBA) (or thiobarbituric acid number (TBZ)) of a diluted beer-based concentrate, or of a beverage, in particular of a beer-based beverage, of a beer, of a low alcoholic beer or of a non-alcoholic beer, is measured by the method MEBAK WBBM 2.4, 2012.

In the present invention, the content of isomerized α acids, measured in bitter units (BU), of a beer-based concentrate or of a beverage, in particular of a beer-based beverage, of a beer, of a low alcoholic beer or of a non-alcoholic beer, is measured by the method MEBAK WBBM 2.17.1, 2012.

In the present invention, the content of CO₂ of a beverage, in particular of a beer-based beverage, of a beer, of a low alcoholic beer or of a non-alcoholic beer, is measured by the method MEBAK WBBM 2.26.1.1, 2012.

In the present invention, the content of total content of carbohydrates of a beer-based concentrate, or a beverage, in particular of a beer-based beverage, of a beer, of a low alcoholic beer or of a non-alcoholic beer, is measured by the method MEABK WBBM 2.7.3, 2012.

In the present invention, the total content of dextrins and limit dextrins are defined as non-fermentable carbohydrates, and are calculated as the total content of carbohydrates as defined above minus the total content of fermentable sugars (defined as total mass concentration of glucose, fructose, sucrose, maltose, and maltotriose, as defined above).

In the present invention, the sweetness of a beer-based concentrate is measured according to the following sensory/organoleptic method:
Step 1: Preparing water-based solutions of the inventive beer-based concentrate (= diluted inventive beer-based concentrate) (10 % by mass) and of sucrose (e.g., 10, 5 and 1 % by mass; dilution series; more or other dilutions can be prepared, if required).

Step 2: Taste-testing conducted by three trained taste-testers as regards the intensity of the sweetness/sweeting power of the diluted inventive beer-based concentrate compared to that of the sucrose solutions.

Step 3: Evaluation of sweetness was achieved by comparing the intensity of the sweetness/sweeting power of the diluted inventive beer-based concentrate with each of the sucrose solutions and determining the sucrose solution causing the same organoleptic sweetness impression as the diluted inventive beer-based concentrate (confirmed by all three tasters):

| diluted beer-based concentrate | Sucrose | result: sweetness (relative to sucrose) |
|---|---|---|
| 10 % by mass | 10 % by mass | 1.0 |
| 10 % by mass | 5 % by mass | 0.5 |
| 10 % by mass | 1 % by mass | 0.1 |

Example: If the diluted inventive beer-based concentrate (10 % by mass) resulted in the same intensity impression of the sweetness/sweeting power as the sucrose solution (10 % by mass), the sweetness of the inventive beer-based concentrate is considered to have a value of 1.0 (sweetness identical to sucrose = 100 % relative to sucrose). If the diluted inventive beer-based concentrate (10 % by mass) resulted in the same intensity impression of the sweetness/sweeting power as the sucrose solution (5 % by mass), the sweetness of the inventive beer-based concentrate is considered to have a value of 0.5 (50 % of sweetness relative to sucrose). If the diluted inventive beer-based concentrate (10 % by mass) resulted in the same intensity impression of the sweetness/sweeting power as the sucrose solution (1 % by mass), the sweetness of the inventive beer-based concentrate is considered to have a value of 0.1 (10 % of sweetness relative to sucrose).

In case the present application documents mention a physical or chemical parameter, the determination method of which is not explicitly mentioned herein, the determination method refers to the usual determination method the skilled person would use for determining said parameter, in particular the method published in: Methodensammlung der Mitteleuropäischen Brautechnischen Analysenkommission (MEBAK), Würze, Bier und Biermischgetränke (WBBM), Version of 2012, or ANALYTICA-EBC (European reference methods to breweries by the European Brewery Convention).

### Summary of the invention

The above object is solved by the subject-matter of the independent claims. Advantageous embodiments are subject-matter of the dependent claims.

The inventor has found that beer-based beverages, in particular non-alcoholic or low alcoholic or even regular beers, in particular beers according to German purity law may advantageously be manufactured or improved by employing a beer-based concentrate which involves the surprising effects of the resulting beverage having an increased platefulness without having a sensory impression typically correlated to wort or sugar products or beverages containing wort or sugar products Therein, the beer-based concentrate has to be produced according to the method as defined in claim 1. Namely, the method for manufacturing the beer-based concentrate includes the steps:
(a) providing a first beer which results from a fermentation process involving brewer's yeast;
   wherein the first beer has a real fermentation degree of more than 75 %, wherein the first beer has a residual extract content of more than 3 % by mass, preferably more than 5 % by mass, in particular more than 6 % by mass;
   wherein in the first beer, the sum of the mass concentrations of glucose, fructose, sucrose, maltose, and maltotriose does not exceed 1 g/L, preferably 0.1 g/L; and
   wherein the first beer contains yeast cells in a quantity of less than 10,000/100 mL, preferably less than 100/100 mL, in particular less than 10/100 mL;
(b) concentrating the first beer by means of a physical process to obtain the beer-based concentrate;
   wherein the temperature of the first beer during concentrating is 72 °C or less, preferably 65 °C or less, in particular 45 to 65 °C;
   wherein the water content of the resulting beer-based concentrate is less than 40 % by mass, preferably less than 20 % by mass; and the ethanol content of the resulting beer-based concentrate is less than 0.5 g/100 g, preferably less than 0.3 g/100 g, in particular less than 0.1 g/100 g;
   wherein the extract content of the resulting beer-based concentrate is 60 to 80 % by mass, preferably 65 to 75 % by mass; and
   wherein the physical process is selected from a group, consisting of: distillation, vacuum distillation, rectification, downflow evaporation, stripping, centrifugal separation, and any combination of these.

The present invention also relates to:
A beer-based concentrate, manufactured by the above method; wherein
the beer-based concentrate is purely based on a beer as a raw material; wherein
the water content of the beer-based concentrate is less than 40 % by mass, preferably less than 20 % by mass;
and the ethanol content of the resulting beer-based concentrate is less than 0.5 g/100 g, preferably less than 0.3 g/100 g, in particular less than 0.1 g/100 g; wherein
the extract content of the beer-based concentrate is 60 to 80 % by mass, preferably 65 to 75 % by mass; wherein
the content of isomerised a acids in the beer-based concentrate is 0 to 500 BU; and wherein
the total content of carbohydrates in the beer-based concentrate is 40 to 60 g/100 ml; wherein
the sum of the mass concentrations of glucose, fructose, sucrose, maltose, and maltotriose in the beer-based concentrate is < 1.5 g/100 g.

A method for manufacturing a beer-based beverage, wherein the method comprises the use of the above beer-based concentrate; wherein
the beer-based beverage preferably has an ethanol content of less than 3.5 % by volume, more preferably less than 0.5 % by volume, in particular less than 0.05 % by volume; wherein
the beer-based beverage contains less than 0.5 g sugar/100 g, wherein sugar refers to mono and di-saccharides.

The use of the above beer-based concentrate,
for manufacturing a beverage, preferably having an ethanol content of less than 3.5 % by volume, more preferably less than 0.5 % by volume, more preferably less than 0.1 % by volume; in particular less than 0.05 % by volume; or
for adjusting the real fermentation degree of a beverage, if the beverage has an ethanol content of more than 0.05 % by volume; or
for increasing the platefulness of a beverage, without increasing the sweetness and while avoiding any wort taste.

The first beer, sometimes also called base beer herein below, which is used as the raw material to produce the beer-based concentrate according to the inventive method maybe any kind of beer and thus, is not limited to a specific type of beer, except that the parameters as defined in claim 1 have to be fulfilled. Typically, the base beer is a fermented, filtered beer which may be hopped or unhopped. The base beer may optionally be treated with activated carbon. In order to meet the parameters of the first beer as defined in claim 1, achieving a high real fermentation degree, e.g., by e.g. an elongation of the fermentation or other suitable means, may be helpful, if required.

During the concentration process, a certain not selective part of flavor components and volatiles of the first beer, will be removed, nevertheless the beer-based concentrate still obtains a malty, and beer typical taste character, without unpleasant wort-taste, and a sweetness of 0.1 or below, as all the sweetening components as mono, di and tri saccharides and also the wort carbonyls have been metabolized under a complete fermentation process. As long as the parameters as defined in claim 1 are fulfilled, the beer-based concentrate is not limited to a specific type of beer. This makes it possible to prepare different kinds of the inventive beer-based concentrates, based on barley-malt, wheat malt or mixtures of these or of any other kind of malt/adjunct composition etc., in different sub-compositions as e.g., dark colors, high bitter, low bitter and malt-taste characters etc.

Another interesting observation in terms of a beer-based concentrate made of a hopped first beer is that the beer-based concentrate surprisingly does not significantly lose α-acids or iso-α acids during concentration process. In other words, the bittering character remains during concentration process. Therefore, the bittering value of a rediluted beer-based concentrate is conserved to the greatest extent and thus, is substantially equal to the first beer, if rediluted to the same real extract value. On the one hand, this allows the beer-based concentrate to transfer the greatest part of the bitter value from the first beer, and finally a basic bitterness, to the final beer-based beverage.

Moreover, the first beer may contain an arbitrary amount of ethanol including no ethanol. The inventor found out, that by keeping the parameters of the first beer, that is, the real fermentation degree, the residual extract content, the concentration of the selection of fermentable sugars, and the yeast cell count in the ranges as defined in step (a) of claim 1, and by concentrating the first beer under the conditions as defined step (b) of claim 1, an inventive beer-based concentrate results which can successfully be applied to achieve the invention's object.

According to the finding of the inventor, complying with the conditions as defined in steps (a) and (b) of the method according to claim 1 leads to a beer-based concentrate which allows the production of beer-based beverages which are alcoholic or non-alcoholic beverages, which moreover have an improved sensory impression as regards the platefulness and completely lack a flavor impression what the skilled person would describe as a "wort-like", sweet flavor, uncharacteristic for beer. Similarly, the inventive beer-based concentrate allows an improvement of regular beers achieving the same advantages, in particular an increase of platefulness without adding sensory drawbacks as regards the flavor impression.

More in detail, because the real fermentation degree of the base beer is more than 75 %, and the residual extract content of the base beer is more than 3 % by mass, preferably more than 5 % by mass, in particular more than 6% by mass, the efficiency of concentrating is sufficiently high. Limiting the total amount of the fermentable sugars to the total amount of hexose, sucrose, maltose, and maltotriose to a maximum of 1 g/L, preferably more than 0.1 g/L, results in a high microbial stability and makes the beer-based concentrate suitable to apply it in the production of non-alcoholic beverages having an ethanol content of less than 0.05 % by volume. Keeping the number of yeast cells low in the first beer as defined in claim 1 efficiently avoids a kind of unwanted autolysis aroma in the resulting beverages caused by the beer-based concentrate.

According to the findings of the inventor, the carbohydrate composition of beer-based concentrate is assumed to mainly consist of non-fermentable limit dextrins, short-chained branched residue of amylopectin from the mashing process and higher molecular oligo-saccharides. Due to its composition and way of preparation, the beer-based concentrate is very low in sweetness, that is, in the range between 0.05 to 0.1 determined by the organoleptic method as defined above (in comparison: a sucrose solution of 10 % by mass has a value of 1.0 by definition; a conventional beer-wort has values of 0.3 to 0.6). It is obvious to see the inventive beer-based concentrate is approximately 10 times lower in sweetness than sugar (sucrose), or 3 to 6 times lower in sweetness than a comparable beer-wort at same concentration of 10 % by mass. The reason for the very low sweetness is, that the sweet-tasting mono, and di-saccharides are metabolized during fermentation, as is the case for the first beer used for manufacturing the inventive beer-based concentrate.

Another advantageous and very important sensoric aspect of the inventive beer-based concentrate is that the beer-based concentrate does not provide any wort-type flavor. The reason for that is, the first beer which is used as the raw material to produce the beer-based concentrate was fully fermented before using it in the inventive method. Thus, flavour compounds typical for wort that may cause a wort-type taste were metabolized during fermentation of the first beer and thus, were removed from it during the fermentation process.

Moreover, due to the low temperature of the beer of below 72 °C, preferably between 45 and 72 °C, during the step of concentrating, the beer is treated in a thermal smooth and gentle way without substantially increasing the heat indicators indicated as content of thiobarbituric acid or thiobarbituric acid number (TBA), the concentration of Maillard products, and effects of aging components (e.g., formation of carbonyls etc.). The lower the treatment temperature, the smoother the treatment of the beer, which is why a treatment temperature of 45 to 65 °C is most preferred, which finally results in a moderate TBA range of below 30 in the re-diluted beer-based concentrate at a concentration of approximately 4 % by mass. Limiting the original gravity of the resulting beer-based concentrate to a range of 60 to 80 % by mass or better to 65 to 75 % by mass allows the concentrate to be stable in terms of chemical, physical and microbial stability (storage stability) on the one hand, and to still be easy to handle, in particular pumpable, on the other hand. Having a maximum water content of up to 40 % by mass additionally contributes to the concentrate to be pumpable, and at the same time minimizes the amount of water to be transported when the concentrate is shipped to the final user. If the extract content of the concentrate is kept in the ranges as defined in claim 1, the concentrate is pumpable even at low temperatures. A low ethanol content of the concentrate of less than 0.5 g/100 g makes the concentrate suitable also for manufacturing of non-alcoholic beverages. Besides, the low water content, the low content or even absence of fermentable sugars, and the high alpha acid content additionally contribute to an improved microbial stability of the concentrate produced. Further, the inventive beer-based concentrate is suitable to adjust, in particular increase in the residual extract content of a beverage, in particular of a beer, by adding of the same to the beverage without introducing a taste or flavor of wort, having in direct impact on the platefulness of the resulting beverage.

In order to achieve the above defined aims, the application of a method step which would include an incomplete/partial fermentation, such as the stopped fermentation or cold-contact method, or fermentation with maltose intolerant yeast strains, e.g., *Saccharomyces Ludwigii*, *Pichia Kleuveri* or others, is excluded from the concentration step (b), since the inventor found that the flavor goals as described above cannot be achieved when a method step relating to or involving a fermentation or partial fermentation would be included in the concentration step (b) due to the presence of a flavor note which is sweet and/or wort-like. In addition, if the beer-based concentrate would be based on a first beer with incomplete/partial fermentation, a beer-based beverage prepared according to claim 3, alternative (bb1) or (bb2), described later, would contain fermentable sugars in a high amount, higher than claimed in claim 1. In the event that the second beer is not filtered, containing living yeast cells, the resulting beer-based beverage, in particular a resulting non-alcoholic beer will start to ferment again, risking being out of specification of the beer-based beverage, in particular being out of specification of the non-alcoholic beer.

An advantageous embodiment of the inventive method may further include the step:
(c) adding of at least one additive to the first beer and/or to the beer-based concentrate;
wherein the additive is one or several in arbitrary combination, selected from the group, consisting of: an antioxidant, preferably ascorbic acid or a sulfide; a pH regulator, preferably phosphoric acid or a sour-wort; a preservative; a salt, preferably zinc sulfate; an enzyme; a color; herbs; a herbal extract; an aroma compound; a sweetener; a sugar/glucose-product; a malt extract; a non-malted barley; wheat; rice; corn; a fruit extract; a fruit puree; a fruit juice; a fruit juice concentrate; hops; a hop product; and any combinations of these.

The addition of one or more of the additives mentioned above allows to advantageously adapt the flavor, chemical and physical properties of the resulting beer-based concentrate in view of the final beverage to be produced by means of the inventive concentrate.

The present invention further includes a method for manufacturing a beer-based beverage as defined in claim 3. The method includes at least the following steps:
(aa) providing a beer-based concentrate, wherein the beer-based concentrate is manufactured by the method as described above or according to claim 1 or 2; and
(bb) mixing
   (bb1) the beer-based concentrate and a second beer; or
   (bb2) the beer-based concentrate, the second beer, and a water; or
   (bb3) the beer-based concentrate and a wort; or
   (bb4) the beer-based concentrate, the wort and the water; or
   (bb5) the beer-based concentrate and the water;
   wherein the portion of the beer-based concentrate in the mixture resulting from each of steps (bb1) to (bb5) is 0.1 to 25 % by mass, preferably 0.2 to 7 % by mass, in particular 0.5 to 5 % by mass;
   wherein in the second beer, the sum of the mass concentrations of glucose, fructose, sucrose, maltose, and maltotriose, does not exceed 1 g/L, preferably 0.1 g/L;
   wherein the water has drinking water quality;
   wherein the water has a content of dissolved oxygen of less than 0.1 mg/L, preferably less than 0.05 mg/L; and
   wherein the mixture resulting in step (bb) preferably contains glucose, fructose, sucrose, maltose, maltotriose, a malt extract, a fruit extract, a fruit puree, a fruit juice or a fruit juice concentrate;
(cc) if the mixture resulting in step (bb) contains the wort, fermenting the resulting mixture by means of brewer's yeast, so that in the resulting fermentation product, the sum of the mass concentrations of glucose, fructose, sucrose, maltose, and maltotriose, does not exceed 1 g/L, preferably 0.1 g/L, to thereby obtain the beer-based beverage;
(dd) carbonizing the beer-based beverage with carbon dioxide gas or a gas mixture containing carbon dioxide and nitrogen such that the amount of gas dissolved in the resulting beer-based beverage is 1 to 8 g/L, preferably 2 to 6 g/L;
wherein the resulting beer-based beverage preferably has an ethanol content of less than 3.5 % by volume, more preferably less than 0.5 % by volume, in particular less than 0.05 % by volume.

When preparing the beer-based beverage as described above, different mixtures may be produced, (bb1) to (bb5) each containing the beer-based concentrate and carbon dioxide gas or a gas mixture containing carbon dioxide and nitrogen. The amount of gas dissolved in the beer-based beverage is 1 to 8 g/L, preferably 2 to 6 g/L. This results in an effervescent, refreshing and easy to drink beverage.

So, the beer-based concentrate may be mixed with a second beer (bb1) in order to improve the platefulness of the second beer without adding a sweet or wort-like flavor but instead basically maintaining the flavor profile of the second beer which may represent the typical flavor profile of a brewery or beverage manufacturer. Here, the second beer may be a non-alcoholic, low alcoholic or regular beer.

In an alternative of the inventive method, the beer-based concentrate may be mixed with the second beer and water, and carbonized/nitrogenized in order to produce a low alcohol or non-alcoholic beer-based beverage (cf. step (bb2)). Here, the second beer may be a non-alcoholic, low alcoholic or regular beer, while the resulting mixture, which is the beer-based beverage, maybe a beer-based beverage considered as non-alcoholic in that the second beer is added into the mixture to an extent that the ethanol content of the resulting beer-based beverage is still below 0.5 % by volume, and the resulting beer-based beverage may be considered as a non-alcoholic beverage. This method allows the manufacturer or subscriber of a regular beer to produce a low alcoholic or even non-alcoholic beer-based on the method of the present invention without the need to have or use any expensive equipment for dealcoholization of regular beers, such as distillation, stripping or membrane systems. As a surprising result of the investigations of the inventor, the resulting non-alcoholic beer-based beverage basically maintains on the first hand the taste character of the original second beer due to the fact that characteristic flavors and volatiles are diluted, but not partly unselectively removed as with physical dealcoholization systems. The complete flavor-profile stays qualitatively obtained by 100%.

On the second hand, the resulting beer-based beverage, in particular the non-alcoholic beer-based beverage, is much lower in ethanol content, but does not lack platefulness by adding the beer-based concentrate, with other words "real extract" in an arbitrarily but favorable amount to the resulting beer-based beverage, in particular the non-alcoholic beer-based beverage.

Moreover manufacturers can in a very easy manner add the beer-based concentrate at favorable different points of dosing during production process, and control/adjust very precisely the real extract of a beer within a very narrow specification Therefore production deviations can be equalized and a more consistent product quality and taste can be reached.

As surprising side effect, is to be able to standardize and streamline industrial beer production, even better than it is possible today. Nowadays it is state of the art to brew a few basic standard high gravity brews in large-scale industrial breweries, diversifying the individual beer types at a later stage by diluting (high gravity), adding color and/or hops, for example. On the one hand adding the beer-based concentrate makes it possible to create even more and new beer types with low fermentation degree or with high residual extract, containing no fermentable sugars based on a high gravity brew with a high RDF. On the other hand, the inventive beer-based concentrate can be used to "repair" or adjust a regular beer, if the residual extract is below specification, e.g. if the RFD is too high, with other words, if the residual extract is too low. This can happen if a manufacturer e.g. dilutes a high gravity beer with a too high RFD, out of specification to a desired/specified alcohol content. As a result of a high gravity dilution, the alcohol content is within the specified limits, but the residual extract is too low, and out of the specification limits. A residual extract specification below specification can lead to a taste deviation, in particular to an undesired empty taste, missing platefulness. In this case the residual extract can be adjusted to the correct value of the residual extract, within the specified limits by adding the inventive beer-based concentrate. Due to the analytical and as well taste characteristic of the inventive beer based concentrate, the platefulness is lifted to the desired level again without adding artificial sweetness or wort taste, or adding sugars as glucose, fructose, sucrose, maltose, and maltotriose. The surprising effect is, that the diluted beer is within the specifications regarding ethanol and as well as the residual extract, and the beer again has the beer typical taste/platefulness characteristics without taste deviation.

Many conventional low alcoholic or non-alcoholic beers are adjusted by adding wort or glucose/sugar to mask the lack of platefulness, which results in a unpleasant wort taste or artificial or beer untypical sweetness-taste impression. The inventive beer-based beverage concentrate shows no wort taste if added to a beer-based beverage, to a beer and in particular, to a low or nonalcoholic beer. Moreover, the sweetness of the beer-based concentrate preferably is in the range of 0.05 to 0.1.

In addition, the beer-based beverage manufactured according to the present invention, that is, a beer and in particular, a low or nonalcoholic beer, shows no beer-untypical sweetness, since the added beer-based concentrate with it very low sweetness. As a result, the sweetness of the beer-based beverage is significantly lower compared to a beverage to which wort or sugar was added in an amount comparable to the amount of the beer-based concentrate. Therefore, the inventive use of the beer-based concentrate does not contribute to an increase of sweetness of the resulting beverage in a way that the increase of sweetness would be sensory perceptible.

Another additional surprising result of the investigation of the inventor is, that the resulting non-alcoholic beer-based beverage basically shows a significant lower sugar content than non-alcoholic beers manufactured according to stopped-fermentation or cold-contact fermentation or fermentation with maltose intolerant yeast strains. The resulting beer-based beverage, in particular the resulting nonalcoholic beer, does not contain sugars as mono or di-saccharides, which in many countries, in particular in Germany, are defined as "sugar", in a relevant amount. As a consequence, the resulting beer-based beverage, in particular, the resulting non-alcoholic beer, may be labeled according to the countries' legislation as "sugarfree" as the resulting beer-based beverage usually contains clearly less than 0.5 g sugar/100 g, preferably less than 0.1 g sugar/100 g.

In addition a surprising result of the invention is the significant lower necessary energy consumption, when manufacturing a beer-based beverage caused by the omission of high energy-consuming complete brew house process (compared to steps (bb1), (bb2), and (bb5)) and high energy-consuming dealcoholization step (compared to steps (bb1) to (bb5)) at the manufacturing site.

Furthermore a positive and surprising side-effect of the resulting beer-based beverage is, that the product development of a non-alcoholic or low alcoholic beverage, in particular a non-alcoholic beer, is easy to conduct. Basically only simple equipment is needed, such as e.g. a commercial weight, and a carbonator equipment as e.g., a "sodastream". Blending and carbonizing the beer-based concentrate, water and beer, hops etc. in 1L lab-scale, the developer can e.g., systematically variate the amount of the beer-based beverage to design the desired platefulness, can e.g. blend with different types of beers or add hops/flavors, if desired. The developer can e.g., taste the result of the blending immediately and can immediately conduct adjustments, until a product with a favorable taste and or platefulness has been obtained. Consequently, there is necessarily no need for expensive test brews in large scales, or test brews/test fermentation in lab-scale which often leads to different taste results than brewing in large scale later on. The manufacturer designing a new product in 1L lab-scale is using the real beer from production for the blending tests, and therefore, the taste result of the lab test blendings will be very close to the taste of the product, if produced in large scale later on. Therefore, the product development can be kept at a low cost and even at low risk level. This brings small and midsize manufacturers of beverages, such as a craft beer brewers, in the favorable position to be able to design and develop quick and reliable a product without a need of additional costly test and analysis equipment.

The manufacturer of the inventive beer-based concentrate and the manufacturing of beer-based beverage who is the user of the inventive beer-based concentrate, usually are not identical. Therefore, the second beer used in step (bb) usually is not identical with the first beer (base beer) as used in step (a) to produce the beer-based concentrate. However, it is not excluded by the invention that both beers are the same.

Thus, it is favorable in step (bb2) that the characteristic flavor profile of the resulting beer-based beverage is mostly related to the second beer added. On the one hand the characteristic flavors and volatiles are diluted, on the other hand, the complete flavor-composition qualitatively stays obtained by 100 %. **In** other words, this allows a beverage manufacturer to produce a non-alcoholic beer-based beverage by using the inventive beer-based concentrate with its beer typical malty taste and flavor without wort taste and sweetness and say "adapt" the flavor of the resulting final mixture by adding a comparable small amount of the second beer, which may be a regular beer or a non-alcoholic beer.

In other words, a beverage manufacturer who produces or distributes a regular beer as one of its products is enabled, by applying the inventive beer-based concentrate and the method described herein, to produce a non-alcoholic or low alcoholic beer having a flavor profile or aroma spectrum close to or at least inspired by that of the second beer. According to the present invention, this can be achieved by simply mixing together the beer-based concentrate, water and the second beer which is selected to be decisive for the flavor profile of the resulting non-alcoholic or low alcoholic beverage. In other words, the function of the addition of the second beer, in particular a regular beer, is to spike the beer-based beverage with flavor, but only to an extend that the resulting beer-based beverage still falls under the legal definition of a non-alcoholic or low alcoholic beverage, if required. As a consequence of this, the beverage manufacturer starting from a conventional beer, is able to produce a non-alcoholic or low alcoholic beverage, preferably a non-alcoholic beer, which is characterized or at least influenced by the typical taste of the second beer, but is a non-alcoholic or low alcoholic beverage, and at the same time does not lose platefulness nor is impaired by a sweet or wort-type of flavor.

In further alternatives of the inventive method of producing a beer-based beverage (cf. steps (bb3), (bb4)), the beer-based concentrate may be mixed with a wort and optionally with water. In these aspects, if the resulting mixture contains wort, and optional additionally hexose, sucrose, maltose, maltotriose, a malt extract, a fruit extract, a fruit puree, a fruit juice or a fruit juice concentrate, the inventive method requires an additional step of fermenting the mixture to an extent that the resulting fermentation product does not contain a total amount of more than 1 g/L, preferably more than 0.1 g/L, of the fermentable sugars as expressed in step (bb) of claim 3. According to the present invention, the step of fermenting the mixture may further include or be followed by a maturation step, which is, however, not obligatory. The fermentation step according to step (cc) of the inventive method, and the optional maturation step which may follow the fermentation step, are carried out in a conventional way, that is, by means of the brewer's yeast and under suitable conditions, such as pitching rate, temperatures etc.

Because of the additional fermentation step, the resulting beer-based beverage contains typical fermentation flavors and volatiles, no wort flavor and does not contain any detectable amount of dissolved oxygen, being advantageous to the taste stability and quality of the resulting beer-based beverage. According to the finding of the inventor, surprisingly the property of providing additional platefulness to the final beverage as well as the bitter characteristics of the beer-based concentrate, in case the beer-based concentrate applied contains hop bittering substances, are basically not affected by the fermentation step and are still available and relevant in the fermented, final beer-based beverage.

The final ethanol content of the resulting beer-based beverage can be adjusted depending on the characteristics of the resulting beverage to be achieved, and is preferably less than 3.5 % by volume for economic reasons, e.g., if a low alcoholic beer is to be produced. In case non-alcoholic beers of less than 0.5 % by volume, in particular less than 0.05 % by volume, are to be reproduced, the ratio of beer-based concentrate, the wort, and optionally the water can be adjusted, accordingly. According to the present invention, the portion of wort determines the final ethanol content, while the addition of both, the beer-based concentrate and the water, does not lead to a significant increase of the ethanol content of the final fermentation product because of the unique composition of the inventive beer-based concentrate.

The resulting beer-based beverage has to be carbonated and/or nitrogenized with carbon dioxide gas or a gas mixture containing carbon dioxide and nitrogen such that the amount of gas dissolved in the resulting beer-based beverage is 1 to 8 g/L, preferably 2 to 6 g/L (cf. step (dd)).

Additives/adjuncts, selected from the group, consisting of: an antioxidant, preferably ascorbic acid or a sulphide; a pH regulator, preferably phosphoric acid or a sour-wort; a preservative; a salt, preferably zinc sulphate; an enzyme; a color; herbs; a herbal extract; an aroma compound; a sweetener; a sugar/glucose-product; a malt extract; a non-malted barley; wheat; rice; corn; a fruit extract; a fruit puree; a fruit juice; a fruit juice concentrate; hops; a hop product; and any combinations of these, can be added optionally to the beer-based concentrate or to the beer-based beverage at any stage (cf. step (ee)).

As a further alternative, a non-alcoholic beer-based beverage may be produced by simply mixing and carbonizing/nitrogenizing, the inventive beer-based concentrate with water, even without the requirement of adding a beer or wort (cf. alternative (bb5)). This alternative represents the simplest way of producing a non-alcoholic beer-based beverage, with an ethanol content of below 0.05 % by volume, even without the requirement of a brew house and/or fermentation facilities or equipment. Additives/adjuncts, selected from the group, consisting of: an antioxidant, preferably ascorbic acid or a sulphide; a pH regulator, preferably phosphoric acid or a sour-wort; a preservative; a salt, preferably zinc sulphate; an enzyme; a color; herbs; a herbal extract; an aroma compound; a sweetener; a sugar/glucose-product; a malt extract; a non-malted barley; wheat; rice; corn; a fruit extract; a fruit puree; a fruit juice; a fruit juice concentrate; hops; a hop product; and any combinations of these, can be added optionally (cf. step (ee)).

The beer-based beverage of the invention contains carbon dioxide gas or a gas mixture containing carbon dioxide and nitrogen such that the amount of gas dissolved in the resulting beer-based beverage is 1 to 8 g/L, preferably 2 to 6 g/L (cf. step (dd)).

As a further alternative, a beer-based beverage with ethanol content of more than 0.05 % by volume, preferably more than 0.5 % by volume, may be produced by simply mixing and carbonizing/nitrogenizing (cf. steps (bb) and (dd)) the beer-based beverage with water, and ethanol, even without the requirement of adding a beer or wort (cf. step (bb5)). This alternative represents the simplest way of producing a beer-based beverage, with an ethanol content above 0.05 % by volume, preferably more than 0.5 % by volume, even without the requirement of brew house and/or fermentation facilities.

Also in this alternative, the beer-based beverage contains carbon dioxide gas or a gas mixture containing carbon dioxide and nitrogen such that the amount of gas dissolved in the resulting beer-based beverage is 1 to 8 g/L, preferably 2 to 6 g/L (cf. step (dd)).

Also in this alternative, additives or adjuncts, selected from the group, consisting of: an antioxidant, preferably ascorbic acid or a sulphide; a pH regulator, preferably phosphoric acid or a sour-wort; a preservative; a salt, preferably zinc sulphate; an enzyme; a color; herbs; a herbal extract; an aroma compound; a sweetener; a sugar/glucose-product; a malt extract; a non-malted barley; wheat; rice; corn; a fruit extract; a fruit puree; a fruit juice; a fruit juice concentrate; hops; a hop product; and any combinations of these, can be added optionally to the beer-based concentrate or to the beer-based beverage at any stage (cf. step (ee)).

Moreover, since a non-alcoholic beverage may be produced based on the inventive method even without the need of using an expensive and high sophisticated technical equipment for dealcoholization of beer, the beverage manufacturer is put into the position to produce the non-alcoholic or low alcoholic beverage in a simple and cost-effective manner independent of brew or batch size. Moreover, since the inventive method of manufacturing the beer-based beverage is technically easy to conduct, the manufacturer does not require any qualification or experience in terms of dealcoholization of beers or other beverages. Therefore, also small or midsize manufacturers of beverages, such as a craft beer brewers, are enabled to produce a non-alcoholic or low alcoholic beverage, in particular a non-alcoholic beer, having the characteristic platefulness and flavor profile of their main stream products, even without the requirement of having their own dealcoholization equipment.

For the fermentation step (cf. step (cc)) of the method of claim 3, choosing individual yeast strains, such as e.g., Ale or wheat beer yeasts, the resulting non-alcoholic or low alcoholic beer-based beverage will be recognized as a non or low alcoholic beers with a beer-typical Ale or wheat beer character, contrary to the production methods of stopped /cold contact fermentation, where the wort and sweet taste will predominate though using probably an ale or a wheat beer yeast.

On top, at least the alternatives (bb1), (bb2), and (bb5) of the inventive method for preparing the beer-based beverage provide an immediate deployment of the beverage without the need for time-consuming additional steps, such as high energy consuming wort processing in the brewhouse and/or time consuming fermentation. An energy consuming separate dealcoholization step is not required at all according to the present invention. Moreover, the inventive method is applicable to all volumes - from very small to large brew batches without any limitation or further adjustment.

In an embodiment of the invention, the inventive method may further include the step of:
(ee) adding of at least one additive to the beer-based concentrate and/or to the mixture during mixing in step (bb) and/or to the beer-based beverage resulting from step (bb) or (cc) or (dd), wherein the additive is at least one, selected from the group, consisting of: an antioxidant, preferably ascorbic acid or a sulphide; a pH regulator, preferably phosphoric acid or a sour-wort; a preservative; a salt, preferably zinc sulphate; an enzyme; a color; herbs; a herbal extract; an aroma compound; a sweetener; a sugar/glucose-product; a malt extract; a non-malted barley; wheat; rice; corn; a fruit extract; a fruit puree; a fruit juice; a fruit juice concentrate; hops; a hop product; and any combinations of these.

This option of adding one or more additives to either the beer-based concentrate or during preparation of the resulting beer-based beverage shows the high flexibility and broad applicability of the inventive method.

In further embodiments, which are defined in claims 5 to 7, the inventive method for manufacturing a beer-based beverage may include one or more of the following steps:
(ff) filtering the beer-based beverage;
(gg) stabilizing the beer-based beverage; and/or
(hh) processing the beer-based beverage, by means pasteurization, or sterile filtration.

These optional treatment steps demonstrate that all of the treatments applicable in the conventional process of manufacturing beers and other beverages can also be applied to the beverage produced based on the inventive beer-based concentrate, in order to either improve the quality or stability of the resulting beverage or to tailor the finally resulting beverage perfectly to the consumer's expectation.

In further alternatives of manufacturing beer-based mixed beverages according to the present invention, such as shandies, Radlers etc., preferably non-alcoholic shandies, Radlers etc., in particular low calories shandies, Radlers etc., to the beer-based concentrate or to the beer-based mixed beverage one or more additives as described above may be added. In these aspects, the resulting beer-based beverage mixture may contain sweeteners, or hexose, or sucrose, or maltose, or maltotriose. Adding one of these additives may be in a concentration such that the beer-based beverage does not contain hexose, sucrose, maltose, and maltotriose in a total amount of more than 1 g/L, preferably more than 0.1 g/L. The resulting beer-based mix beverages, such as shandies, Radlers, etc., have a beer- as well as a fruit typical softdrink taste character (e.g., Lemon) with high level of sweetness compared to conventional beer-based beverages.

This alternative represents the simplest way of producing a beer-based mixed beverage, as shandies, Radlers, etc., even without the requirement of a brew house facility and/or fermentation facility on the one hand.

On the other hand, in a beer-based mixed beverage of the above type, such as shandies, Radlers, etc., having below 3,5 % ethanol by volume, preferably 0,5 % ethanol by volume, in particular below 0,05 % ethanol by volume, the added beer-based concentrate contributes to a satisfying platefulness, reduction of the sugar content to a minimum, preferably to zero, which leads to a sweetness reduction, improving the intensity of the intended combined beer and fruit taste, resulting to an improved sensory impression. As a consequence, the calories of the beverage are reduced significantly.

In some cases, the resulting beer-based beverage may have a slightly increased turbidity. In case it is aimed to obtain a beer-based beverage which has a lower turbidity than the initial blend, by means < 100 EBC, the final beverage can be stored at low temperature to or centrifuged by a conventional beer centrifuge to obtain a desired turbidity. If even a lower turbidity by means < 5 EBC, preferably < 2 EBC, more preferable < 1 EBC, a filtration of the resulting beverage by means of conventional filtration technique may be applied. In analog manner to conventional stabilizing of a beverage, stabilizing of the beer-based beverage may be applied additionally or alternatively to filtration. If required, stabilization may be carried out by conventional stabilization or enzymatic means. Finally, the beer-based beverage, may be processed by means of pasteurization, or sterile filtration.

The alternative (bb1) of the inventive method according to claim 3 provides the opportunity to improve the flavor impression of a beer, in particular to improve the platefulness of beers of which consumers may experience as having an insufficient body. Therefore, the second beer used in step (bb) usually is not identical to the base beer as used in step (a) to produce the beer-based concentrate. However, it is not excluded that both beers are the same.

In contrast to conventional ways of improving the platefulness, that is, e.g., residual extract, influencing the mashing program in brew house accordingly, or conducting a partial/incomplete fermentation (stopped fermentation or cold contact fermentation) or using a low fermenting or even maltose intolerant yeast (e.g., *S. Ludwigii, Pichia Kleuveri*), keep some residual extract, or adding of wort, or sugar/glucose-products in the resulting beer-based beverage. The inventive solution of adding the inventive beer-based concentrate to an arbitrary, favorable amount allows to increase the platefulness without adding of sweetness or a wort-type of flavor character. Further, the beer-based beverage resulting in the respective method step (bb) or (cc) or (dd) represents a ready-to-drink beverage which is ready for conventional packaging in bottles, kegs, cans etc.

As a side effect of the inventive methods according to one of claims 3 to 7, since the inventive beer-based concentrate is purely based on a beer as a raw material, namely the first beer, as can be concluded from the manufacturing method according to claim 1 of the present invention, adding the concentrate does not require to mention additional ingredients on the label of the resulting beer-based beverage in most of the jurisdictions, because of the identity of the ingredients. Moreover, the methods and products suggested by the present invention allow to be in line with the German/Bavarian purity law for beer, if required and in case the first beer and the following manufacturing process is in accordance to the German/Bavarian purity law.

The inventive methods of manufacturing the beer-based beverage employing the inventive beer-based concentrate opens the door for creating new alcoholic, low alcoholic or non-alcoholic beverages or for improving existing beverages, in particular regular or non-alcoholic beers, without the need for specific additional equipment, which would otherwise require tremendous investment and space in the production plant. The manufacturer can individually adapt the manufacturing process of the beer-based beverage in line with the locally present equipment and circumstances, manufacturing methods and in accordance with the individual manufacturing philosophy. Moreover, the application of the inventive beer-based concentrate safes a lot of time and energy to the user of the same and provides a high flexibility, since the same beer-based concentrate may be applied to basically an unlimited number of beer or beverages. Despite this, due to the option of "spiking" with the second beer, an individual character of the resulting beer-based beverage can easily and effectively be achieved, even if the identical beer-based concentrate would be used by many beverage producers.

As the user of the inventive method of manufacturing a beer-based beverage is free in finding out the optimum mixing ratio of the beer-based concentrate with the second beer or with the second beer and water, or optional adjuncts the inventive method can be adapted in an easy way to achieve the optimum result according to the expectations of the manufacturer or the consumers.

Referring to the product side, the above object is also solved by the beer-based concentrate as defined in claim 8. According thereto, a beer-based concentrate is claimed which is manufactured by the method according to claim 1 or 2, and wherein the water content of the beer-based concentrate is less than 40 % by mass, preferably less than 20 % by mass; and the ethanol content of the resulting beer-based concentrate is less than 0.5 g/100 g, preferably less than 0.3 g/100 g, in particular less than 0.1 g/100 g. The extract content of the beer-based concentrate is 60 to 80 % by mass, preferably 65 to 75% by mass.

The content of isomerised α acids in the beer-based concentrate is 0 to 500 BU, preferably 2 to 400 BU, preferably 10 to 300 BU, in particular 20 to 200 BU. The content of the dextrins or limit dextrins in the beer-based concentrate is 20 to 60 g/100 ml. The mass concentration of each of glucose, fructose, sucrose, maltose, and maltotriose in the beer-based concentrate is preferably below the detection limit according to the analysis methods, that is, < 0.1 g/100 g. The sum of the mass concentrations of glucose, fructose, sucrose, maltose, and maltotriose, in the beer-based concentrate is < 1.5 g/100 g. Finally, the sweetness of the beer-based concentrate preferably is in the range of 0.05 to 0.1.

Moreover, the above object is also solved by a method for manufacturing a beer-based beverage, wherein the method comprises the use of the beer-based concentrate according to claim 8 and/or manufactured by the method according to claim 1 or 2. Therein, the beer-based beverage preferably has an ethanol content of less than 3.5 % by volume, more preferably less than 0.5 % by volume, in particular less than 0.05 % by volume. The beer-based beverage contains less than 0.5 g sugar/100 g, wherein sugar refers to mono and di-saccharides.

The effects and advantages of the inventive methods as outlined above in detail are valid for the inventive beer-based concentrate and/or beer-based beverage, in analog manner.

Finally, the present application claims the use of the inventive beer-based concentrate according to claim 8 or manufactured by the method according to claim 1 or 2 for at least one of the following purposes:
- for manufacturing a beverage, preferably having an ethanol content of less than 3.5 % by volume, more preferably less than 0.5 % by volume, more preferably less than 0.1 % by volume; in particular less than 0.05 % by volume; or
- for adjusting the residual extract of a beverage, if the beverage has an ethanol content of more than 0.05 % by volume; or
- for increasing the platefulness of a beer-based beverage., without increasing the sweetness and while avoiding any wort taste.

The present invention suggests for the first time the use of the inventive beer-based concentrate in the manufacturing of beverages in order to achieve one or more of the technical effects and advantages as outlined above.

### Examples of the invention

### Example 1

Herein below, there is the description of an exemplary embodiment for the preparation of a beer-based concentrate according to the present invention according to claim 1. Manufacturing of a first beer to be used in step (a) of the inventive method:
The first beer can be manufactured according to below receipt, and manufacturing proceedings

| Brew house; Receipe | | |
|---|---|---|
| grist composition | | |
| Pilsner Malt | 21 | kg/HL |
| Caramelmalt | 1,7 | kg/HL |
| | | |

| Hop composition | | |
|---|---|---|
| Magnum , | Pellet TYP 90 | |
| Alpha Acid | 14,5 | % |
| dosage | 0,05 | kg/HL |
| | | |

| Fermentation | | |
|---|---|---|
| Yeasttype | W34/70 | |
| Pitchrate | 15*10⁶ | yeastcells/ml |
| airation | 10 | mg/L O₂ |
| temperature | 13 | °C |
| time | 10 | days |
| | | |

| Filtration | | |
|---|---|---|
| Kieselguhr filtration, | | |
| no stabilization | | |

### The resulting first beer -analyses

| First beer analyses | | |
|---|---|---|
| Original Gravity | 16 | % by mass |
| RDF | 65,6 | % |
| real residual extract | 5,5 | % by mass |
| alcohol | 5,54 | % |
| alcohol | 7,09 | % by volume |
| color | 13 | EBC |
| Bittering Units | 20,3 | EBU |
| CO₂ | 2 | g/L |

### Step (b) of the method: manufacturing a beer-based concentrate:

The filtered first beer enters a vacuum stripping dealcoholization plant where it is decarbonized followed by a dealcoholisation < 0.99 % ethanol by volume at 48-53 °C. The dealcoholized first beer leaves the deacoholization plant at a temperature of 20-50 °C, which is than entering a single pass multi-stage tubular falling film evaporator system. The dealcoholization plant can be alternatively a membrane system or be omitted, in case an evaporation system can remove the full ethanol content of the incoming first beer. In this case it is recommended to decarbonize the beer prior entering the evaporator system to avoid excessive foam creation. In the evaporator, the first beer is preheated to 45-65 °C. The first beer is evenly distributed in the column head. Depending on the program and the desired type of beer-based concentrate, typically 3 or preferably 4, most preferably 5, evaporation body can be chosen.

Even optional flavor recovery can be used, but it's not compulsory. The tubes in use are heated from the outside with steam. The developing vapors of the first beer distribute the first beer in a thin layer alongside the tube walls towards the separation chamber at the bottom of the column. Due to the applied pressure gradient between 0.092-0.3 bar absolute, the pre-concentrated product can be further concentrated in the next evaporation bodies with the vapors from the previous evaporation body, until the desired concentration of 60 to 80 % by mass of has been reached. By means of the above exemplary method, a beer-based concentrate which is according to the present invention, is obtained.

### Exemplary process parameters for the inventive method for manufacturing a beer-based concentrate

| Evaporation System | | | | |
|---|---|---|---|---|
| pressure range | | | 0,092-0,3 | bar |
| Order of the evaporation bodies | | E2->E1>E3>E5 | | |

| Input | | | | |
|---|---|---|---|---|
| flow first beer | | | 4.500 | kg/h |
| Real Extract of first beer at inlet | | | 5,5 | % by mass |
| waterevaporation | | Approx. | 4.125 | kg/h |
| T | | | | |
| output | | | | |
| beer-based concentrate | | | 275-365 | kg/h |
| concentration at outlet | | | 60-80 | % by mass |
| temperature outlet | | | 49 | °C |

### Analysis of the resulting beer-based concentrate:

| | |
|---|---|
| Original gravity: | 60 to 80 % by mass |
| Bitter units: | 0 to 500 BU |
| Color | 20 to 3000 EBC |
| pH | 3,5 to 4.5 |
| density | 1.15-1.45 |
| Total dissolvable nitrogen | 800-1000 mg/100g |
| TBA | 20-30 |
| Fructose | < 0.1-0.5 g/100g |
| Glucose | < 0.1 g/100g |
| Maltose | < 0.1 g/100g |
| Maltotriose | < 0.1-0.7 g/100g |
| total carbohydrates | 50-61 g/100g |
| Sweetness | 0.05-0.1 |
| beer spoiling bacteria (NBB) | none |
| coliform. bacteria, *E. coli*, *Bacillus cereus* | < 1 CFU/g |

### Example 2

Herein below, there is the description of an exemplary embodiment for the preparation of a beer-based beverage according to the present invention according to claim 3.

Example 2 describes the preparation of 500 L of a non-alcoholic beer-based beverage having < 0.5 % ethanol by volume by using the inventive beer-based concentrate and a regular beer as the second beer and water (example for alternative (bb2) of claim 3).

The beer-based concentrate was prepared according to Example 1 of the present invention as described above, and is characterized by the following parameters:

| | |
|---|---|
| Concentration: | approx. 65 % by mass |
| Density: | approx. 1.3 g/ml |
| Bitter units: | 180 BU |
| Color: | 9 EBC |
| Ethanol content: | 0.0 % by volume |

The second beer used to prepare the non-alcoholic beer-based beverage having < 0.5 % ethanol by volume according to the inventive method is characterized by the following parameters:

| | |
|---|---|
| Original gravity: | 10.7 % by mass |
| Ethanol content: | 4.7 % by volume |
| Residual real extract | approx. 1.7 % by mass |

### Preparation steps of 500 L of a non-alcoholic beer-based beverage having < 0.5 % ethanol by volume in batch mode

Step (1): An appropriate vessel with a gross volume of 600 L, preferably equipped with suitable blending or mixing equipment like agitators or jet mixers, is filled with water to a desired level of approximately 430 L with an O₂ content less than 0.1mg/l.

Step (2): Approximately 22 L of the beer-based concentrate is either dosed into the water inline, while filling the vessel, or into the water in the tank so that the beer-based concentrate should have a proportion in the mixture of approximately 4 % by mass. The mixture is sufficiently homogenized by agitating.

Step (3): Approximately 47-48 L of the second beer with an ethanol-content of 4.7 % by volume is added to the blend of water and beer-based concentrate. The mixture is homogenized.

Step (4): Approximately 3.5-4.5 kg of CO₂ is added to achieve a CO₂ content of 4-5 g/L in the resulting beer-based beverage.

In the above steps, the mixing was carried out by blending and homogenizing of the following components:

| | |
|---|---|
| second beer: | 47-48 L; |
| beer-based concentrate: | approx. 22-23 L; and |
| water: | approx. 430l; |

analyzes & taste of the obtained non-alcoholic beverage (non-alcoholic beer)

| | |
|---|---|
| ethanol content: | < 0.5 % by volume |
| real Extract: | approx. 4 % by mass |
| content of dissolved CO₂ | approx. 4-5g/l |
| taste | clearly recognizable flavor characteristics of the second beer, no wort taste |
| platefullness | satisfying impression, no unpleasant sweetness . |

Other additional additives and ingredients as defined above, such as acidity regulators, preservatives, sterile sour-wort, extract, glucose, foam stabilizers, color, flavors, fragrances, fruit extracts, enzymes, ascorbic acid, SO2, hop oils, or isomerized alfa-acids, can be dosed according to other individual "receipts" into the vessel.

For the batch preparation the blending of all components, CO₂, optionally additives and ingredients is generally arbitrary and is not limited to a prescribed sequence. The producer has the free choice to centrifuge, to filtrate and/or stabilize, or pasteurize single components or intermediate products or the complete batch prior filling into containers.

If the complete processing has been completed in that way, that the product underlies no further processing or intermediate processing and treatment removing or adding substances or ingredients including sterile filtration prior filling, the product can be considered as a non-alcoholic beer with an ethanol content of below 0.5 % by volume.

Thus, the resulting beer-based beverage will show a beer typical character, comparable in taste with the second beer, neither with wort taste nor with an unpleasant sweet taste impression.

The preparation of the non-alcoholic beer with an ethanol content of below 0.5 % by volume is not mandatory limited to Example 2 described above, e.g., by means of batch mode, but can be carried out in different ways according to the existing technique and technology or manufacturing philosophy of the user, as for example continuous/semi-continuous inline blending and carbonation.

### Example 3

Herein below, there is the description of another exemplary embodiment for the preparation of a beer-based beverage according to the present invention according to claim 3.

Example 3 describes the preparation of 100 L of a non-alcoholic dry-hopped Brown Ale with an ethanol content of below 0.5 % by volume by using the inventive beer-based concentrate, wort and water, followed by fermentation, maturation according to the invention (example for alternative (bb4) of claim 3).

### Step (1) Preparation of an "Ale" wort in the brew house:

malt composition of the brown ale:

| | |
|---|---|
| 57.1 % | Pilsen |
| 9.5 % | Wheat |
| 14.3 % | Cara hell |
| 19.1 % | Cara Munich II |

Hop dosage : Saazer, 5% Alpha, Pellets Type 90; dosage approx. 0,1kg/hl
wort boiling time: 60 min
obtained wort: OG 10.7 % by mass
Step (2) 10 L of wort is cooled to 22 °C, pitched (pitching rate approx. 75 g per hl) and aerated (10 mg/L); then it is transferred to fermentation tank;
yeast: dry yeast (*Saccharomyces cerevisiae*), LalBrew Nottingham^{™}, a top fermenting yeast
Step (3) preparation of a beer-based beverage by means of a diluted beer-based concentrate, with approximately 4 % by mass
Step (3.1) approximately 90 L of water with 70-80 °C from the brew house hot water tank is filled into the wort kettle. The water is heated to 100 °C.
Step (3.2) adding of hops and boiling for 60 min, at a evaporation rate of approximately 4 %. After boiling the volume of water is approximately 86-87 L.
Step (3.3), adding 5.7-6.2 kg of the inventive beer-based concentrate (manufactured e.g., as outlined in Example 1 above) to the wort kettle approximately 5-10 minutes, prior to the end of the boiling process.
Step (3.4) The brew batch including water and the beer-based concentrate with a concentration of approximately 4 % by mass is chilled via wort cooler and pumped into fermentation tank, into the 9-10 L of wort pitched in advanced as derived from Step (2) described above.
Step (3.5) fermentation of the beer-based beverage at 22 °C in approximately 2-3 days
Step (3.6) maturation of the beer-based beverage at 0.0 °C for approximately 10-20 days
Step (3.7) On day (4) of maturation, adding of 270 g Amarillio Pellets type 45 to the beer-based beverage for dry hopping purpose
Step (3.8) carbonation of the beer-based beverage during maturation until the desired amount of 4-5g/L has reached.
Step (3.9) remove the hops stepwise at the last days at the end of maturation phase from the cone of both fermentation tanks
Obtained non-alcoholic beer with ethanol content of below 0.5 % by volume, type brown Ale; real extract: approximately 4 % by mass

### Result 1:

The obtained non-alcoholic beer-based beverage (beer with an ethanol content of below 0.5 % by volume, type brown Ale) showed a typical malty and fruity brown ale character, with a very satisfying platefulness, and a nice dry hop-flavor.

### Result 2:

The obtained non-alcoholic beer-based beverage showed neither an unpleasant sweetness, nor a wort type kind of taste.

The obtained non-alcoholic beer-based beverage was compared with an alcoholic beer originating from a parallel brew, type brown Ale, brewed, fermented and maturated under same condition, with the following

### Analysis results:

| | | |
|---|---|---|
| • | OG : | 10.7 % by mass |
| • | RFD | 65.1 % |
| • | Residual real extract : | 3.73 % by mass |
| • | Ethanol | 4.49 % by volume |

### Result 3:

The malty and fruity Ale character of the parallel brew is clearly recognizable in the non-alcoholic beer-based beverage prepared according to the invention as produced according to Example 3.

To verify the acceptance of the manufactured non-alcoholic beer-based beverage, type brown Ale, of Example 3, a simple taste panel was made with 36 taster (neither specialized nor educated tasters, with other words: normal consumers):
total amount of tasters: 36 (12 women and 24 men), between 20 and 63 years old

### Preconditions:

- All tasters were informed that they will taste and evaluate a beer
- 18 tasters (9 women and 9 men) of the 36 persons were informed that the beer was a non-alcoholic beer
- The tasters where asked to evaluate the questions with characters between 0 and 6 points , whereas 0 points = not acceptable and 6 points = very good

### Summary of the taste panel results of Example 3:

1.) The tasters documented a positive impression of platefulness, taste, and smell of the inventively prepared non-alcoholic beer-based beverage (> 4 of 6 points).
2.) All tasters evaluated the non-alcoholic beer-based beverage, type brown Ale, as a product with character typical for beer.
3.) 80 % of the tasters had a positive drinkability impression, that is, they were encouraged to drink a second beer of same type
4.) The average acceptance of the inventively prepared non-alcoholic beer-based beverage was evaluated high by 5.1 of 6 points
5.) 17 % of the tasters surprisingly were not able to recognize the inventively prepared non-alcoholic beer-based beverage, type brown Ale, as a "non-alcoholic beer", although they were informed beforehand that the beverage to be tasted was a beer. Those tasters had the impression the beverage was a beer with higher alcohol content.

### Taste panel result in detail:

| Taste, smell and platefulness | 36 persons | 12 women | 24 men |
|---|---|---|---|
| Platefullness, average | 4 .5 | 5 | 4.3 |
| Bitterness, average | 4.1 | 2.5 | 5 |
| Taste - flavor, average | 4.2 | 3.5 | 4.5 |
| smell , average | 5.2 | 4.5 | 5.5 |
| | | | |

| Drinkability & Impression | 36 persons | 12 women | 24 men |
|---|---|---|---|
| The product has a typical beer-character | 36 of 36 | 12 of 12 | 24of 24 |
| | 100% | 100% | 100% |
| would you drink one more of same type | 29 of 36 | 6 of 12 | 23 of 24 |
| | 80% | 50% | 96% |
| total impression , average | 5.1 | 4.4 | 5.5 |
| | | | |

| number of tasters who did not know inventively prepared beverage was a non-alcoholic beer | 18 persons | 6 women | 12 men |
|---|---|---|---|
| recognized as a non-alcoholic beer | 15 of 18 | 4 of 6 | 11of 12 |
| not recognized a non-alcoholic beer | 3 of 18 | 2 of 6 | 1 of 12 |
| not recognized a non-alcoholic beer | 17% | 33% | 8% |

In a second taste panel with 21 consumers (5 women and 16 men) the obtained non-alcoholic beer-based beverage, type brown Ale, was compared with other non-alcoholic beers from the market:
- Beer (1): industrial dealcoholized beer, with added aroma, with an ethanol content of below 0.5 % by volume
- Beer (2) manufactured with cold contact fermentation method ; with an ethanol content of below 0.5 % by volume
- Beer (3) manufactured with maltose intolerant yeast; added aroma; with an ethanol content of below 0.5 % by volume
- Beer (4) the obtained inventively prepared non-alcoholic beer-based beverage (non-alcoholic beer), type brown Ale, with an ethanol content of below 0.5 % by volume

### Results from the taste panel (2) of Example 3:

- 81% of the tasters evaluated the inventively prepared non-alcoholic beer-based beverage, type brown Ale, as the beer, mostly finding a character typical for beer;
- 76 % of the tasters preferred the inventively prepared non-alcoholic beer-based beverage, type brown Ale, of the four beers tested

| | Beer1 | Beer2 | Beer3 | Beer4 |
|---|---|---|---|---|
| Alcohol % by volume | <0.5 | <0.5 | <0.5 | <0.5 |
| which of the beers has the most beer-typical character | 2/21 | 1/21 | 1/21 | 17/21 |
| | 10% | 5% | 5% | 81% |
| which of the beers you would prefer (ranking ) | 3/21 | 1/21 | 1/21 | 16/21 |
| ranking as no. 1 | 14% | 5% | 5% | 76% |
| average ranking | 2 | 3.3 | 3.3 | 1.4 |

| ranking | industrial dealcoholized beer, with added aroma | stopped fermentation cold contact method | fermentation with maltose intolerant yeast and added aroma | inventively prepared non-alcoholic beer-based beverage acc. to Example 3 |
|---|---|---|---|---|
| 1=best | | | | |
| 4= worst | | | | |
| Ethanol | < 0.05 % by vol. | < 0.05 % by vol. | < 0.05 % by vol. | < 0.05 % by vol. |
| Taster 1 | 2 | 3 | 4 | 1 |
| Taster 2 | 2 | 4 | 3 | 1 |
| Taster 3 | 2 | 3 | 4 | 1 |
| Taster 4 | 1 | 3 | 4 | 2 |
| Taster 5 | 3 | 1 | 2 | 4 |
| Taster 6 | 2 | 4 | 3 | 1 |
| Taster 7 | 2 | 3 | 4 | 1 |
| Taster 8 | 2 | 4 | 3 | 1 |
| Taster 9 | 2 | 3 | 4 | 1 |
| Taster 10 | 1 | 4 | 3 | 2 |
| Taster 11 | 4 | 2 | 1 | 3 |
| Taster 12 | 2 | 3 | 4 | 1 |
| Taster 13 | 2 | 4 | 3 | 1 |
| Taster 14 | 2 | 3 | 4 | 1 |
| Taster 15 | 2 | 4 | 3 | 1 |
| Taster 16 | 2 | 3 | 4 | 1 |
| Taster 17 | 2 | 4 | 3 | 1 |
| Taster 18 | 2 | 3 | 4 | 1 |
| Taster 19 | 2 | 4 | 3 | 1 |
| Taster 20 | 2 | 3 | 4 | 1 |
| Taster 21 | 2 | 4 | 3 | 1 |
| ranking average | 2.0 | 3.3 | 3.3 | 1.3 |

### Example 4

Herein below, there is the description of another exemplary embodiment for the preparation of a beer-based beverage (alcoholic beer) according to the present invention according to claim 3.

Example 4 describes the preparation of a beer with an ethanol content of approximately 2.7 % by volume, type pale lager, according to the invention with improved platefulness using the inventive beer-based concentrate (example for alternative (bb1) of claim 3).

### The Example 4 describes the preparation

An industrially produced lager light beer brewed according to German Purity Law showed the following analyses:

| | | |
|---|---|---|
| • | OG: | 7.8 % by mass |
| • | ethanol : | 3.04 % by volume |
| • | Real Extract | 3.07 % by mass |

The desired specification was:

| | | |
|---|---|---|
| • | OG: | 7-8 % by mass |
| • | ethanol: | 2.5-2.7 % by volume |
| • | real extract | 3.1-3.8 % by mass |

Diluting the beer to the desired ethanol content of 2.5-2.7 % by volume resulted in a too low real extract of approx. 2.5 % by mass, which is below the specification. In addition, the diluted beer showed an unsatisfying platefulness and "body".

In order to prepare the beer-based beverage, the inventive beer-based concentrate (manufactured e.g., as outlined in Example 1 above) was added to the industrially produced lager light beer (second beer) prior to filtration in an amount of 0.7-0.9 kg of the beer-based concentrate/hl of the second beer. After mixing and dilution, the analysis results where within the specification, and the beer showed the expected platefulness and body, without any unpleasant sweetness, or a wort type kind of taste.

### Example 5

Herein below, there is the description of another exemplary embodiment for the preparation of a beer-based beverage according to the present invention according to claim 3.

Example 5 describes the preparation of a non-alcoholic beer-based beverage with an ethanol content of below 0.5 % by volume by using the inventive beer-based concentrate and a non-alcoholic wheat beer (second beer) with an ethanol content of below 0.2 % by volume, brewed according to German Purity Law (example for alternative (bb1) of claim 3).

The non-alcoholic wheat beer with an ethanol content of below 0.2 % by volume was brewed according to German Purity Law and dealcoholized by a thermal stripping column with the following specification, resulting in the second beer.

### Origin wheat beer analyses prior to dealcoholization

| | | |
|---|---|---|
| • | ethanol : | 4.7 % by volume |
| • | real extract: | 2.5-3 % by mass |

### Wheat beer analyses after dealcoholization

| | | |
|---|---|---|
| • | ethanol | < 0.2 % by volume |
| • | real extract: | 2.5-3 % by mass |

### Taste of the wheat beer (second beer) after dealcoholization:

- missing body, harsh unbalanced taste

In a first approach (not according to the invention), to improve the taste and platefulness 15-25 % by mass of a wort with an OG of 12 % by mass was added to the wheat beer prior the dealcoholization process in order to mask and overcome the lack of platefulness.

### Analyses after blending with wort and dealcoholization

| | | |
|---|---|---|
| • | ethanol: | < 0.2 % by volume |
| • | real extract: | 5.8 % by mass |
| • | thereof sugars: | 2.8 % by mass |
| • | as per German food legal definition : | "zuckerarm" ("low in sugar content") |

### Taste after blending with wort and dealcoholization

- satisfying Body and platefulness;
- too sweet;
- a rather unpleasant wort-type kind of taste

In a second approach (according to the invention), to reach the same specification with satisfying "body" and platefulness in the dealcoholized wheat beer, 3.8-4.2 kg of the inventive beer-based concentrate was added to the wheat beer prior the dealcoholization process. All other steps were identical to the first approach.

### Analyses after blending with beer-based concentrate and dealcoholization

| | | |
|---|---|---|
| • | ethanol: | < 0.2 % by volume |
| • | real extract: | 5.8 % by mass |
| • | thereof sugars: | < 0.1 % by mass |

### Taste after blending with beer-based concentrate and dealcoholization

- satisfying body and platefullness
- no unpleasant sweetness
- clear reduced sugar content, as per German legal definition "free of sugar#
- no wort-type kind of taste anymore
- better character and more typical for beer

### Example 6

Herein below, there is the exemplary sweetness comparison of beer-based concentrate according to the present invention according to claim 1 versus different sweeteners

| Comparison of sweetness of beer-based concentrate vs different sweeteners | | | |
|---|---|---|---|
| Product | composition / Quality | sweetness | Remark |
| beer-based concentrate | mixture of oligo-and polysaccharides | 0.05-0.15 | example according to the invention |
| Sucrose | Disaccaride | 1 | comparative example |
| Wort | mixture of mono-; di-; oligo-; polysaccharides | 0.3-0.6 | comparative example |
| Maltose | Disaccharide | 0.33-0.45 | comparative example |
| Glucose | Monosaccharide | 0.74-0.8 | comparative example |
| Fructose | Monosaccharide | 1.17-1.75 | comparative example |

Herein below, there is the exemplary carbohydrate comparison of beer-based concentrate according to the present invention versus a typical malt extract (comparative example) showing the low content of different sugars in the inventive beer-based concentrate compared to a conventional non-fermented malt extract.

| Carbohydrate compositions | | | |
|---|---|---|---|
| Beer-based beverage vs barley-malt extract | | | |
| | beer-based concentrate | typical malt extract | |
| Total content of dextrines | 40-60 | 10-21 | % |
| Glucose | < 0.1 | Σ = 10-12 | % |
| Fructose | < 0.1-0.7 | | % |
| Saccarose | < 0.1 | 0-4 | % |
| Maltose | < 0.1 | 40-55 | % |
| Maltotriose | < 0.1-0.7 | 5-9 | % |

### Prior art

https://www.vis.bayern.de/essen_trinken/gewuerze_suesses/zucker.htm?include_ matomo=true
Heinz Rutloff, Jürgen Proll, Andreas Leuchtenberger;(2013) Lebensmittel-Biotechnologie und Ernährung: Probleme und Lösungsansätze , Springer Verlag ; ISBN 3-540-61135-5.
John McMurry (1998). Organic Chemistry (4th ed.). Brooks/Cole. p. 468. ISBN 978-0-13-286261-5.
Dermer, OC (1947). "The Science of Taste". Proceedings of the Oklahoma Academy of Science. 27: 15-18. cited as "Derma, 1947" in McLaughlin, Susan; Margolskee, RobertF. (1994). "The Sense of Taste". American Scientist. 82 (6): 538-545. ISSN 0003-0996. JSTOR 29775325.
Joesten, Melvin D; Hogg, John L; Castellion, Mary E (2007). "Sweeteness Relative to Sucrose (table)". The World of Chemistry: Essentials (4th ed.). Belmont, California: Thomson Brooks/Cole. p. 359. ISBN 978-0-495-01213-9. Retrieved 14 September 2010.
Guyton, Arthur C; Hall, John; Hall, John E. (2006). Guyton and Hall Textbook of Medical Physiology (11th ed.). Philadelphia: Elsevier Saunders. p. 664. ISBN 978-0-7216-0240-0.
Dermer, OC (1947). "The Science of Taste". Proceedings of the Oklahoma Academy of Science. 27: 15-18.
Spillane WJ (2006-07-17). Optimising Sweet Taste in Foods. Woodhead Publishing. p. 264. ISBN 9781845691646.
Gräber S, Malzextrakt, RD-13-00400 (2003) in Böckler F., Dill B., Eisenbrand G., Faupel F., Fugmann B., Gamse T., Matissek R., Pohnert G., Rühling A., Schmidt S., Sprenger G., RÖMPP [Online], Stuttgart, Georg Thieme Verlag, [Januar 2022]https://roempp.thieme.de/lexicon/RD-13-00400.
Krüger Eckard /Anger Heinz Michael Grundwerk 1990 (Stand1992) Kennzahlen zur Betriebskontrolle und Qualitätsbeschreibung in der Brauwirtschaft,-Loseblatt-Ausgabe; B. Behr's Verlag GmnH & Co, ISBN 3-925673-75-X.

## Claims

1. Method for manufacturing a beer-based concentrate, including the steps:
(a) providing a first beer which results from a fermentation process involving brewer's yeast;
wherein the first beer has a real fermentation degree of more than 75 %, wherein the first beer has a residual extract content of more than 3 % by mass, preferably more than 5 % by mass, in particular more than 6 % by mass;
wherein in the first beer, the sum of the mass concentrations of glucose, fructose, sucrose, maltose, and maltotriose, does not exceed 1 g/L, preferably 0.1 g/L; and
wherein the first beer contains yeast cells in a quantity of less than 10,000/100 mL, preferably less than 100/100 mL, in particular less than 10/100 mL;
(b) concentrating the first beer by means of a physical process to obtain the beer-based concentrate;
wherein the temperature of the first beer during concentrating is 72 °C or less, preferably 65 °C or less, in particular 45 to 65 °C;
wherein the water content of the resulting beer-based concentrate is less than 40 % by mass, preferably less than 20 % by mass; and the ethanol content of the resulting beer-based concentrate is less than 0.5 g/100 g, preferably less than 0.3 g/100 g, in particular less than 0.1 g/100 g;
wherein the extract content of the resulting beer-based concentrate is 60 to 80 % by mass, preferably 65 to 75 % by mass; and
wherein the physical process is selected from a group, consisting of: distillation, vacuum distillation, rectification, downflow evaporation, stripping, centrifugal separation, and any combination of these;
wherein the real fermentation degree is measured by the method MEBAK WBBM 2.9.6.3, 2012, the residual extract content is measured by the method MEBAK WBBM 2.9.6.3, 2012, the sum of the mass concentrations of glucose, fructose, sucrose, maltose, and maltotriose is calculated by adding the single mass concentrations of said sugars as respectively measured by the method MEBAK WBBM 2.7.1, 2021, and the yeast cell count of the first beer is measured by the method EBC 3.1.1.1, as well as the content of water of the concentrate is measured by the method MEBAK WBBM 2.28.1.1, 2012, the content of ethanol of the concentrate is measured by the method MEBAK WBBM 2.9.6.3, 2012, and the content of extract of the concentrate is measured by the method MEBAK WBBM 2.9.2.3, 2012.

2. Method according to claim 1, further including the step:
(c) adding of at least one additive to the first beer and/or to the beer-based concentrate;
wherein the additive is at least one, selected from the group, consisting of: an antioxidant, preferably ascorbic acid or a sulphide; a pH regulator, preferably phosphoric acid or a sour-wort; a preservative; a salt, preferably zinc sulphate; an enzyme; a color; herbs; a herbal extract; an aroma compound; a sweetener; a sugar/glucose-product; a malt extract; a non-malted barley; wheat; rice; corn; a fruit extract; a fruit puree; a fruit juice; a fruit juice concentrate; hops; a hop product; and any combinations of these.

3. Method according to claim 1 or 2, for manufacturing a beer-based beverage, further including the steps:
(aa) providing a beer-based concentrate, wherein the beer-based concentrate is manufactured by the method according to claim 1 or 2; and
(bb) mixing
(bb1) the beer-based concentrate and a second beer; or
(bb2) the beer-based concentrate, the second beer, and a water; or
(bb3) the beer-based concentrate and a wort; or
(bb4) the beer-based concentrate, the wort and the water; or
(bb5) the beer-based concentrate and the water;
wherein the portion of the beer-based concentrate in the mixture resulting from each of steps (bb1) to (bb5) is 0.1 to 25 % by mass, preferably 0.2 to 7 % by mass, in particular 0.5 to 5 % by mass;
wherein in the second beer, the sum of the mass concentrations of glucose, fructose, sucrose, maltose, and maltotriose, does not exceed 1 g/L, preferably 0.1 g/L;
wherein the water has drinking water quality, and
wherein the water has a content of dissolved oxygen of less than 0.1 mg/L;
(cc) if the mixture resulting in step (bb) contains the wort, fermenting the resulting mixture by means of brewer's yeast, so that in the resulting fermentation product, the sum of the mass concentrations of glucose, fructose, sucrose, maltose, and maltotriose, does not exceed 1 g/L, preferably 0.1 g/L, to thereby obtain the beer-based beverage; and
(dd) carbonizing the beer-based beverage with carbon dioxide gas or a gas mixture containing carbon dioxide and nitrogen such that the amount of gas dissolved in the resulting beer-based beverage is 1 to 8 g/L;
wherein the resulting beer-based beverage preferably has an ethanol content of less than 3.5 % by volume, more preferably less than 0.5 % by volume, in particular less than 0.05 % by volume.

4. Method according to claim 3, further including the step:
(ee) adding additives to the beer-based concentrate and/or to the mixture during mixing in step (bb) and/or to the beer-based beverage resulting from step (bb) or (cc) or (dd);
wherein the additive is at least one, selected from the group, consisting of: an antioxidant, preferably ascorbic acid or a sulphide; a pH regulator, preferably phosphoric acid or a sour-wort; a preservative; a salt, preferably zinc sulphate; an enzyme; a color; herbs; a herbal extract; an aroma compound; a sweetener; a sugar/glucose-product; a malt extract; a non-malted barley; wheat; rice; corn; a fruit extract; a fruit puree; a fruit juice; a fruit juice concentrate; hops; a hop product; and any combinations of these.

5. Method according to claim 3 or 4, further including the step:
(ff) filtering the beer-based beverage.

6. Method according to one of claims 3 to 5, further including the step:
(gg) stabilizing the beer-based beverage.

7. Method according to one of claims 3 to 6, further including the step:
(hh) processing the beer-based beverage by pasteurization or sterile filtration.

8. Beer-based concentrate, manufactured by the method according to claim 1 or 2;
wherein the beer-based concentrate is purely based on a beer as a raw material;
wherein the water content of the beer-based concentrate is less than 40 % by mass, preferably less than 20 % by mass; and the ethanol content of the resulting beer-based concentrate is less than 0.5 g/100 g, preferably less than 0.3 g/100 g, in particular less than 0.1 g/100 g;
wherein the extract content of the beer-based concentrate is 60 to 80 % by mass, preferably 65 to 75 % by mass;
wherein the content of isomerised α acids in the beer-based concentrate is 0 to 500 BU; and
wherein the total content of carbohydrates in the beer-based concentrate is 40 to 60 g/100 ml;
wherein the sum of the mass concentrations of glucose, fructose, sucrose, maltose, and maltotriose in the beer-based concentrate is < 1.5 g/100 g;
wherein the content of water of the beer-based concentrate is measured by the method MEBAK WBBM 2.28.1.1, 2012, the ethanol content of the beer-based concentrate is measured by the method MEBAK WBBM 2.9.6.3, 2012, the extract content of the beer-based concentrate is measured by the method MEBAK WBBM 2.9.2.3, 2012, the content of isomerised α acids of the beer-based concentrate is measured by the method MEBAK WBBM 2.17.1, 2012, the content of carbohydrates of the beer-based concentrate is measured by the method MEABK WBBM 2.7.3, 2012, the mass concentration of each of glucose, fructose, sucrose, maltose, and maltotriose in the beer-based concentrate is measured by the method MEBAK WBBM 2.7.1, 2021, and the sum of the mass concentrations of glucose, fructose, sucrose, maltose, and maltotriose in the beer-based concentrate is calculated by adding the single mass concentrations of said sugars.

9. A method for manufacturing a beer-based beverage, wherein the method comprises the use of the beer-based concentrate according to claim 8 and/or manufactured by the method according to claim 1 or 2;
wherein the beer-based beverage preferably has an ethanol content of less than 3.5 % by volume, more preferably less than 0.5 % by volume, in particular less than 0.05 % by volume;
wherein the beer-based beverage contains less than 0.5 g sugar/100 g, wherein sugar refers to mono and di-saccharides;
wherein the ethanol content of the beer-based beverage is measured by the method MEBAK WBBM 2.9.6.3, 2012, and the mass concentration of each sugar in the beer-based beverage is measured by the method MEBAK WBBM 2.7.1, 2021.

10. Use of the beer-based concentrate according to claim 8, or manufactured by the method according to claim 1 or 2,
for manufacturing a beverage, preferably having an ethanol content of less than 3.5 % by volume, more preferably less than 0.5 % by volume, more preferably less than 0.1 % by volume; in particular less than 0.05 % by volume; or
for adjusting the real fermentation degree of a beverage, if the beverage has an ethanol content of more than 0.05 % by volume; or
for increasing the platefulness of a beverage, without increasing the sweetness and while avoiding any wort taste,
wherein the ethanol content of the beverage is measured by the method MEBAK WBBM 2.9.6.3, 2012, and the real fermentation degree of the beverage is measured by the method MEBAK WBBM 2.9.6.3, 2012.

11. Use according to claim 10, wherein the beverage is a beer or beer-based beverage.

## Patentansprüche

1. Verfahren zur Herstellung eines Konzentrats auf Bierbasis, das die folgenden Schritte umfasst:
(a) Bereitstellen eines ersten Bieres, das aus einem Gärungsprozess unter Verwendung von Bierhefe stammt;
wobei das erste Bier einen wirklichen Vergärungsgrad von mehr als 75 % aufweist, wobei das erste Bier einen Restextraktgehalt von mehr als 3 Masseprozent, vorzugsweise mehr als 5 Masseprozent, insbesondere mehr als 6 Masseprozent aufweist;
wobei in dem ersten Bier die Summe der Massekonzentrationen von Glukose, Fruktose, Saccharose, Maltose und Maltotriose 1 g/l, vorzugsweise 0,1 g/l, nicht überschreitet; und
wobei das erste Bier Hefezellen in einer Menge von weniger als 10.000/100 ml, vorzugsweise weniger als 100/100 ml, insbesondere weniger als 10/100 ml enthält;
(b) Konzentrieren des ersten Bieres mittels eines physikalischen Verfahrens, um das Konzentrat auf Bierbasis zu erhalten;
wobei die Temperatur des ersten Bieres während des Konzentrierens 72 °C oder weniger, vorzugsweise 65 °C oder weniger, insbesondere 45 bis 65 °C beträgt;
wobei der Wassergehalt des resultierenden Konzentrats auf Bierbasis weniger als 40 Masseprozent, vorzugsweise weniger als 20 Masseprozent beträgt; und der Ethanolgehalt des resultierenden Konzentrats auf Bierbasis weniger als 0,5 g/100 g, vorzugsweise weniger als 0,3 g/100 g, insbesondere weniger als 0,1 g/100 g beträgt;
wobei der Extraktgehalt des resultierenden Konzentrats auf Bierbasis 60 bis 80 Masseprozent, vorzugsweise 65 bis 75 Masseprozent, beträgt; und wobei das physikalische Verfahren aus einer Gruppe ausgewählt ist, bestehend aus: Destillation, Vakuumdestillation, Rektifikation, Abwärtsverdampfung, Strippen, Zentrifugalabscheidung und einer beliebigen Kombination davon;
wobei der wirkliche Vergärungsgrad nach der Methode MEBAK WBBM 2.9.6.3, 2012, gemessen wird, der Restextraktgehalt nach der Methode MEBAK WBBM 2.9.6.3, 2012, gemessen wird, die Summe der Massekonzentrationen von Glukose, Fruktose, Saccharose, Maltose und Maltotriose durch Addition der einzelnen Massekonzentrationen dieser Zucker berechnet wird, die jeweils nach der Methode MEBAK WBBM 2.7.1, 2021, gemessen wurden, und die Hefezellzahl des ersten Bieres nach der Methode EBC 3.1.1.1 gemessen wird, sowie der Wassergehalt des Konzentrats nach der Methode MEBAK WBBM 2.28.1.1, 2012, der Ethanolgehalt des Konzentrats nach der Methode MEBAK WBBM 2.9.6.3, 2012, und der Extraktgehalt des Konzentrats nach der Methode MEBAK WBBM 2.9.2.3, 2012, bestimmt werden.

2. Verfahren nach Anspruch 1, das ferner den folgenden Schritt umfasst:
(c) Zugabe mindestens eines Zusatzstoffs zum ersten Bier und/oder zum Konzentrat auf Bierbasis;
wobei der Zusatzstoff mindestens einer aus der Gruppe ist, bestehend aus: einem Antioxidationsmittel, vorzugsweise Ascorbinsäure oder einem Sulfid; einem pH-Regulator, vorzugsweise Phosphorsäure oder einer Sauerwürze; einem Konservierungsmittel; einem Salz, vorzugsweise Zinksulfat; einem Enzym; einem Farbstoff; Kräuter; einem Kräuterextrakt; einer Aromakomponente; einem Süßstoff; einem Zucker-/Glukoseprodukt; einem Malzextrakt; unvermälzter Gerste; Weizen; Reis; Mais; einem Fruchtextrakt; einem Fruchtpüree; einem Fruchtsaft; einem Fruchtsaftkonzentrat; Hopfen; einem Hopfenprodukt; sowie beliebige Kombinationen davon.

3. Verfahren nach Anspruch 1 oder 2 zur Herstellung eines Getränks auf Bierbasis, das ferner die folgenden Schritte umfasst:
(aa) Bereitstellen eines Konzentrats auf Bierbasis, wobei das Konzentrat auf Bierbasis gemäß dem Verfahren nach Anspruch 1 oder 2 hergestellt wurde; und
(bb) Mischen
(bb1) des Konzentrats auf Bierbasis und eines zweiten Bieres; oder
(bb2) des Konzentrats auf Bierbasis, des zweiten Bieres und von Wasser; oder
(bb3) des Konzentrats auf Bierbasis und einer Würze; oder
(bb4) des Konzentrats auf Bierbasis, der Würze und des Wassers; oder
(bb5) des Konzentrats auf Bierbasis und des Wassers;
wobei der Anteil des Konzentrats auf Bierbasis in der aus jedem der Schritte (bb1) bis (bb5) resultierenden Mischung 0,1 bis 25 Masseprozent, vorzugsweise 0,2 bis 7 Masseprozent, insbesondere 0,5 bis 5 Masseprozent, beträgt;
wobei im zweiten Bier die Summe der Massekonzentrationen von Glukose, Fruktose, Saccharose, Maltose und Maltotriose 1 g/l, vorzugsweise 0,1 g/l, nicht überschreitet;
wobei das Wasser Trinkwasserqualität aufweist; und
wobei das Wasser einen Gehalt an gelöstem Sauerstoff von weniger als 0,1 mg/l aufweist;
(cc) falls die in Schritt (bb) erhaltene Mischung Würze enthält, Vergären der resultierenden Mischung mittels Bierhefe, so dass im resultierenden Gärungsprodukt die Summe der Massekonzentrationen von Glukose, Fruktose, Saccharose, Maltose und Maltotriose 1 g/l, vorzugsweise 0,1 g/l, nicht überschreitet, um dadurch das Getränk auf Bierbasis zu erhalten; und
(dd) Karbonisieren des Getränks auf Bierbasis mit Kohlenstoffdioxidgas oder einem Kohlenstoffdioxid und Stickstoff enthaltenden Gasgemisch, so dass die Menge an in dem resultierenden Getränk auf Bierbasis gelöstem Gas 1 bis 8 g/l beträgt;
wobei das resultierende Getränk auf Bierbasis vorzugsweise einen Ethanolgehalt von weniger als 3,5 Vol.-%, noch bevorzugter von weniger als 0,5 Vol.-%, insbesondere von weniger als 0,05 Vol.-%, aufweist.

4. Verfahren nach Anspruch 3, das ferner den folgenden Schritt umfasst:
(ee) Zugabe von Zusatzstoffen zum Konzentrat auf Bierbasis und/oder zur Mischung während des Mischvorgangs in Schritt (bb) und/oder zu dem aus Schritt (bb) oder (cc) oder (dd) resultierenden Getränk auf Bierbasis; wobei das Additiv mindestens eines ist, ausgewählt aus der Gruppe bestehend aus: einem Antioxidans, vorzugsweise Ascorbinsäure oder einem Sulfid; einem pH-Regulator, vorzugsweise Phosphorsäure oder einer sauren Würze; einem Konservierungsmittel; ein Salz, vorzugsweise Zinksulfat; ein Enzym; ein Farbstoff; Kräuter; einen Kräuterextrakt; eine Aromaverbindung; einen Süßstoff; ein Zucker-/Glukoseprodukt; einen Malzextrakt; ungemälzte Gerste; Weizen; Reis; Mais; einen Fruchtextrakt; ein Fruchtpüree; einen Fruchtsaft; ein Fruchtsaftkonzentrat; Hopfen; ein Hopfenprodukt; sowie beliebige Kombinationen davon.

5. Verfahren nach Anspruch 3 oder 4, das ferner den folgenden Schritt umfasst:
(ff) Filtrieren des Getränks auf Bierbasis.

6. Verfahren nach einem der Ansprüche 3 bis 5, das ferner den folgenden Schritt umfasst:
(gg) Stabilisieren des Getränks auf Bierbasis.

7. Verfahren nach einem der Ansprüche 3 bis 6, das ferner den folgenden Schritt umfasst:
(hh) Aufbereitung des Getränks auf Bierbasis durch Pasteurisierung oder Sterilfiltration.

8. Konzentrat auf Bierbasis, hergestellt gemäß dem Verfahren nach Anspruch 1 oder 2;
wobei das Konzentrat auf Bierbasis ausschließlich auf Bier als Rohstoff basiert; wobei der Wassergehalt des Konzentrats auf Bierbasis weniger als 40 Masseprozent, vorzugsweise weniger als 20 Masseprozent, beträgt; und der Ethanolgehalt des resultierenden Konzentrats auf Bierbasis weniger als 0,5 g/100 g, vorzugsweise weniger als 0,3 g/100 g, insbesondere weniger als 0,1 g/100 g, beträgt;
wobei der Extraktgehalt des Konzentrats auf Bierbasis 60 bis 80 Masseprozent, vorzugsweise 65 bis 75 Masseprozent, beträgt;
wobei der Gehalt an isomerisierten α-Säuren im Konzentrat auf Bierbasis 0 bis 500 BU beträgt; und
wobei der Gesamtgehalt an Kohlenhydraten im Konzentrat auf Bierbasis 40 bis 60 g/100 ml beträgt;
wobei die Summe der Massekonzentrationen von Glukose, Fruktose, Saccharose, Maltose und Maltotriose im Konzentrat auf Bierbasis < 1,5 g/100 g beträgt;
wobei der Wassergehalt des Konzentrats auf Bierbasis nach dem Verfahren MEBAK WBBM 2.28.1.1, 2012, der Ethanolgehalt des Konzentrats auf Bierbasis nach dem Verfahren MEBAK WBBM 2.9.6.3, 2012, und der Extraktgehalt des Konzentrats auf Bierbasis nach dem Verfahren MEBAK WBBM 2. 9.2.3, 2012, der Gehalt an isomerisierten α-Säuren des Konzentrats auf Bierbasis nach der Methode MEBAK WBBM 2.17.1, 2012, der Gehalt an Kohlenhydraten des Konzentrats auf Bierbasis nach der Methode MEBAK WBBM 2.7.3, 2012, die Massekonzentration von Glukose, Fruktose, Saccharose, Maltose und Maltotriose im Konzentrat auf Bierbasis wird nach der Methode MEBAK WBBM 2.7.1, 2021, bestimmt werden, und die Summe der Massekonzentrationen von Glukose, Fruktose, Saccharose, Maltose und Maltotriose im Konzentrat auf Bierbasis durch Addition der einzelnen Massekonzentrationen dieser Zucker berechnet wird.

9. Verfahren zur Herstellung eines Getränks auf Bierbasis, wobei das Verfahren die Verwendung des Konzentrats auf Bierbasis nach Anspruch 8 und/oder eines gemäß dem Verfahren nach Anspruch 1 oder 2 hergestellten Konzentrats auf Bierbasis umfasst;
wobei das Getränk auf Bierbasis vorzugsweise einen Ethanolgehalt von weniger als 3,5 Vol.-%, noch bevorzugter von weniger als 0,5 Vol.-% und insbesondere von weniger als 0,05 Vol.-% aufweist;
wobei das Getränk auf Bierbasis weniger als 0,5 g Zucker/100 g enthält, wobei sich "Zucker" auf Mono- und Disaccharide bezieht;
wobei der Ethanolgehalt des Getränks auf Bierbasis nach dem Verfahren MEBAK WBBM 2.9.6.3, 2012, gemessen wird, und die Massekonzentration jedes Zuckers im Getränk auf Bierbasis nach dem Verfahren MEBAK WBBM 2.7.1, 2021, gemessen wird.

10. Verwendung des Konzentrats auf Bierbasis nach Anspruch 8 oder das gemäß dem Verfahren nach Anspruch 1 oder 2 hergestellt wurde,
zur Herstellung eines Getränks, vorzugsweise das ein Ethanolgehalt von weniger als 3,5 Vol.-%, noch bevorzugter weniger als 0,5 Vol.-%, noch bevorzugter weniger als 0,1 Vol.-%; insbesondere weniger als 0,05 Vol.-%, aufweist; oder
zur Anpassung des wirklichen Vergärungsgrades eines Getränks, falls das Getränk einen Ethanolgehalt von mehr als 0,05 Vol.-% aufweist; oder
zur Erhöhung der Vollmundigkeit eines Getränks, ohne die Süße zu erhöhen und unter Vermeidung jeglichen Würzgeschmacks,
wobei der Ethanolgehalt des Getränks nach dem Verfahren MEBAK WBBM 2.9.6.3, 2012, gemessen wird, und der wirkliche Vergärungsgrad des Getränks nach dem Verfahren MEBAK WBBM 2.9.6.3, 2012, gemessen wird.

11. Verwendung nach Anspruch 10, wobei das Getränk ein Bier oder ein Getränk auf Bierbasis ist.

## Revendications

1. Procédé de fabrication d'un concentré à base de bière, comprenant les étapes suivantes :
(a) fournir une première bière issue d'un processus de fermentation impliquant de la levure de bière ;
dans lequel la première bière présente un degré de fermentation réel supérieur à 75 %, et dans lequel la première bière présente une teneur en extrait résiduel supérieure à 3 % en masse, de préférence supérieure à 5 % en masse, en particulier supérieure à 6 % en masse ;
dans lequel, dans la première bière, la somme des concentrations massiques de glucose, de fructose, de saccharose, de maltose et de maltotriose ne dépasse pas 1 g/L, de préférence 0,1 g/L ; et
dans lequel la première bière contient des cellules de levure en une quantité inférieure à 10 000/100 ml, de préférence inférieure à 100/100 ml, en particulier inférieure à 10/100 ml ;
(b) concentrer la première bière au moyen d'un procédé physique pour obtenir le concentré à base de bière ;
dans lequel la température de la première bière pendant la concentration est de 72 °C ou moins, de préférence de 65 °C ou moins, en particulier de 45 à 65 °C ;
dans lequel la teneur en eau du concentré à base de bière obtenu est inférieure à 40 % en masse, de préférence inférieure à 20 % en masse ; et la teneur en éthanol du concentré à base de bière obtenu est inférieure à 0,5 g/100 g, de préférence inférieure à 0,3 g/100 g, en particulier inférieure à 0,1 g/100 g ;
dans lequel la teneur en extrait du concentré à base de bière obtenu est de 60 à 80 % en masse, de préférence de 65 à 75 % en masse ; et
dans lequel le procédé physique est choisi parmi un groupe comprenant : la distillation, la distillation sous vide, la rectification, l'évaporation à flux descendant, le stripping, la séparation centrifuge et toute combinaison de ceux-ci ;
dans lequel le degré de fermentation réel est mesuré selon la méthode MEBAK WBBM 2.9.6.3, 2012, la teneur en extrait résiduel est mesurée selon la méthode MEBAK WBBM 2.9.6.3, 2012, et la somme des concentrations massiques de glucose, de fructose, de saccharose, maltose et du maltotriose est calculée en additionnant les concentrations massiques individuelles desdits sucres, telles que mesurées respectivement selon la méthode MEBAK WBBM 2.7.1, 2021, et le nombre de cellules de levure de la première bière est mesuré selon la méthode EBC 3.1.1.1, tandis que la teneur en eau du concentré est mesurée selon la méthode MEBAK WBBM 2.28.1.1, 2012, la teneur en éthanol du concentré est mesurée selon la méthode MEBAK WBBM 2.9.6.3, 2012, et la teneur en extrait du concentré est mesurée selon la méthode MEBAK WBBM 2.9.2.3, 2012.

2. Procédé selon la revendication 1, comprenant en outre l'étape suivante :
(c) l'ajout d'au moins un additif à la première bière et/ou au concentré à base de bière ;
dans lequel l'additif est au moins un élément choisi parmi le groupe constitué de : un antioxydant, de préférence l'acide ascorbique ou un sulfure ; un régulateur de pH, de préférence l'acide phosphorique ou un moût acide ; un conservateur ; un sel, de préférence du sulfate de zinc ; une enzyme ; un colorant ; des herbes ; un extrait d'herbes ; un composé aromatique ; un édulcorant ; un produit à base de sucre ou de glucose ; un extrait de malt ; de l'orge non maltée ; du blé ; du riz ; du maïs ; un extrait de fruit ; une purée de fruit ; un jus de fruit ; un concentré de jus de fruit ; du houblon ; un produit à base de houblon ; et toute combinaison de ceux-ci.

3. Procédé selon la revendication 1 ou 2, destiné à la fabrication d'une boisson à base de bière, comprenant en outre les étapes suivantes :
(aa) fournir un concentré à base de bière, ledit concentré à base de bière étant fabriqué selon le procédé selon la revendication 1 ou 2 ; et
(bb) mélanger
(bb1) le concentré à base de bière et une deuxième bière ; ou
(bb2) le concentré à base de bière, la deuxième bière et de l'eau ; ou
(bb3) le concentré à base de bière et un moût ; ou
(bb4) le concentré à base de bière, le moût et l'eau ; ou
(bb5) le concentré à base de bière et l'eau ;
dans lequel la proportion du concentré à base de bière dans le mélange résultant de chacune des étapes (bb1) à (bb5) est de 0,1 à 25 % en masse, de préférence de 0,2 à 7 % en masse, en particulier de 0,5 à 5 % en masse ;
dans lequel, dans la deuxième bière, la somme des concentrations massiques de glucose, de fructose, de saccharose, de maltose et de maltotriose ne dépasse pas 1 g/L, de préférence 0,1 g/L ;
dans lequel l'eau est de qualité potable, et
dans lequel l'eau présente une teneur en oxygène dissous inférieure à 0,1 mg/L ;
(cc) si le mélange obtenu à l'étape (bb) contient le moût, faire fermenter le mélange obtenu à l'aide de levure de bière, de sorte que, dans le produit de fermentation obtenu, la somme des concentrations massiques de glucose, de fructose, de saccharose, de maltose et de maltotriose ne dépasse pas 1 g/L, de préférence 0,1 g/L, afin d'obtenir ainsi la boisson à base de bière ; et
(dd) carbonater la boisson à base de bière avec du dioxyde de carbone gazeux ou un mélange gazeux contenant du dioxyde de carbone et de l'azote, de telle sorte que la quantité de gaz dissous dans la boisson à base de bière obtenue soit de 1 à 8 g/L ;
dans lequel la boisson à base de bière obtenue présentant de préférence une teneur en éthanol inférieure à 3,5 % en volume, de préférence inférieure à 0,5 % en volume, et en particulier inférieure à 0,05 % en volume.

4. Procédé selon la revendication 3, comprenant en outre l'étape suivante :
(ee) ajouter des additifs au concentré à base de bière et/ou au mélange pendant le mélange à l'étape (bb) et/ou à la boisson à base de bière issue de l'étape (bb), (cc) ou (dd) ;
dans lequel l'additif est au moins un élément choisi parmi le groupe constitué de : un antioxydant, de préférence l'acide ascorbique ou un sulfure ; un régulateur de pH, de préférence l'acide phosphorique ou un moût acide ; un conservateur ; un sel, de préférence du sulfate de zinc ; une enzyme ; un colorant ; des herbes ; un extrait d'herbes ; un composé aromatique ; un édulcorant ; un produit à base de sucre/glucose ; un extrait de malt ; de l'orge non maltée ; du blé ; du riz ; du maïs; un extrait de fruit ; une purée de fruit ; un jus de fruit ; un concentré de jus de fruit ; du houblon ; un produit à base de houblon ; et toute combinaison de ceux-ci.

5. Procédé selon la revendication 3 ou 4, comprenant en outre l'étape suivante :
(ff) filtrer la boisson à base de bière.

6. Procédé selon l'une des revendications 3 à 5, comprenant en outre l'étape suivante :
(gg) stabiliser la boisson à base de bière.

7. Procédé selon l'une des revendications 3 à 6, comprenant en outre l'étape suivante :
(hh) traitement de la boisson à base de bière par pasteurisation ou filtration stérile.

8. Concentré à base de bière, fabriqué selon le procédé décrit dans la revendication 1 ou 2 ;
dans lequel le concentré à base de bière est exclusivement élaboré à partir de bière comme matière première ; dans lequel la teneur en eau du concentré à base de bière est inférieure à 40 % en masse, de préférence inférieure à 20 % en masse ; et la teneur en éthanol du concentré à base de bière obtenu est inférieure à 0,5 g/100 g, de préférence inférieure à 0,3 g/100 g, en particulier inférieure à 0,1 g/100 g ;
dans lequel la teneur en extrait du concentré à base de bière est de 60 à 80 % en masse, de préférence de 65 à 75 % en masse ;
dans lequel la teneur en acides α isomérisés dans le concentré à base de bière est 0 à 500 BU ; et
dans lequel la teneur totale en glucides dans le concentré à base de bière est de 40 à 60 g/100 ml ;
dans lequel la somme des concentrations massiques de glucose, de fructose, de saccharose, de maltose et de maltotriose dans le concentré à base de bière est < 1,5 g/100 g ;
dans lequel la teneur en eau du concentré à base de bière est mesurée selon la méthode MEBAK WBBM 2.28.1.1, 2012, la teneur en éthanol du concentré à base de bière est mesurée selon la méthode MEBAK WBBM 2.9.6.3, 2012, la teneur en extrait du concentré à base de bière est mesurée selon la méthode MEBAK WBBM 2. 9.2.3, 2012, la teneur en acides α isomérisés du concentré à base de bière est mesurée selon la méthode MEBAK WBBM 2.17.1, 2012, la teneur en glucides du concentré à base de bière est mesurée selon la méthode MEBAK WBBM 2.7.3, 2012, la concentration massique du glucose, du fructose, du saccharose, du maltose et du maltotriose dans le concentré à base de bière est mesurée selon la méthode MEBAK WBBM 2.7.1, 2021, et la somme des concentrations massiques du glucose, du fructose, du saccharose, du maltose et du maltotriose dans le concentré à base de bière est calculée en additionnant les concentrations massiques individuelles desdits sucres.

9. Procédé de fabrication d'une boisson à base de bière, dans lequel le procédé comprend l'utilisation du concentré à base de bière selon la revendication 8 et/ou est fabriqué selon le procédé selon la revendication 1 ou 2 ;
dans lequel la boisson à base de bière présente de préférence une teneur en éthanol inférieure à 3,5 % en volume, de préférence inférieure à 0,5 % en volume, et en particulier inférieure à 0,05 % en volume ;
dans lequel la boisson à base de bière contient moins de 0,5 g de sucre pour 100 g, le terme « sucre » désignant les mono- et disaccharides ;
dans lequel la teneur en éthanol de la boisson à base de bière est mesurée selon la méthode MEBAK WBBM 2.9.6.3, 2012, et la concentration massique de chaque sucre dans la boisson à base de bière est mesurée selon la méthode MEBAK WBBM 2.7.1, 2021.

10. Utilisation du concentré à base de bière selon la revendication 8, ou fabriqué selon le procédé selon la revendication 1 ou 2,
pour la fabrication d'une boisson, présentant de préférence une teneur en éthanol inférieure à 3,5 % en volume, de préférence inférieure à 0,5 % en volume, et de préférence encore inférieure à 0,1 % en volume ; en particulier inférieure à 0,05 % en volume ; ou
pour ajuster le degré de fermentation réel d'une boisson, si celle-ci présente une teneur en éthanol supérieure à 0,05 % en volume ; ou
pour augmenter la rondeur en bouche d'une boisson, sans en augmenter la saveur sucrée et tout en évitant tout goût de moût,
dans laquelle la teneur en éthanol de la boisson étant mesurée selon la méthode MEBAK WBBM 2.9.6.3, 2012, et le degré de fermentation réel de la boisson est mesuré selon la méthode MEBAK WBBM 2.9.6.3, 2012.

11. Utilisation selon la revendication 10, dans laquelle la boisson est une bière ou une boisson à base de bière.
